# EUROPEAN PATENT APPLICATION

(11) **EP 4 692 143 A1**
(43) Date of publication of application: **11.02.2026**
(21) Application number: 24779218.7
(22) Date of filing: 06.03.2024
(51) Int. Cl.: C08F 236/04, B60C 1/00, C08F 230/08, C08K 5/13, C08K 5/18, C08L 15/00, C08L 21/00, C08L 47/00

(54) **STABILIZED CONJUGATED DIENE-BASED POLYMER**

(30) Priority: 24.03.2023 JP 2023048341
(71) Applicant: Zeon Corporation, Tokyo 100-8246 (JP)
(72) Inventor: WATANABE, Kenji, Tokyo 100-8246 (JP)
(74) Representative: Maiwald GmbH
(86) International application number: PCT/JP2024/008557
(87) International publication number: WO 2024/203083

(57) **Abstract**

Provided is a stabilized conjugated diene polymer having excellent Mooney viscosity stability during storage. Provided is a stabilized conjugated diene polymer comprising a conjugated diene polymer containing at least one of a tin atom and a silicon atom, two or more hindered phenol-based stabilizers, and an aromatic amine-based stabilizer.

## Description

### TECHNICAL FIELD

The present invention relates to a stabilized conjugated diene polymer.

### BACKGROUND ART

Due to recent increasing environmental concerns, a polymer for use in tires for automobiles which can provide excellent fuel efficiency is required. Tires prepared from a rubber composition containing a conjugated diene polymer and silica as a filler have lower heat buildup than that of tires prepared from traditional rubber compositions containing carbon black, and thus have more excellent fuel efficiency.

As a conjugated diene polymer which is used to form such a tire, Patent Document 1 discloses a conjugated diene rubber having a modifying structure derived from a siloxane compound at at least one terminal of a polymer chain containing a conjugated diene monomer unit and a monomer unit of a vinyl compound having a functional group interactive with silica.

### RELATED ART DOCUMENT

### PATENT DOCUMENT

Patent Document 1: WO 2019/073829

### SUMMARY OF THE INVENTION

### PROBLEMS TO BE SOLVED BY THE INVENTION

The conjugated diene rubber prepared by the technique disclosed in Patent Document 1 can provide a cross-linked rubber having excellently low heat buildup, high wet grip, and high operation stability, and also has excellent processability. However, there is a room for improvement in the Mooney viscosity stability during storage.

The present invention has been made in consideration of the above problems, and an object of the present invention is to provide a stabilized conjugated diene polymer having excellent Mooney viscosity stability during storage.

### MEANS FOR SOLVING PROBLEMS

The present inventor, who has conducted extensive research to achieve the above object, has found that the above object can be achieved by adding specific stabilizers in combination to a conjugated diene polymer (A) containing a tin atom and/or a silicon atom, and has completed the present invention.

Specifically, the present invention provides a stabilized conjugated diene polymer as described below.
[1] A stabilized conjugated diene polymer comprising a conjugated diene polymer containing at least one of a tin atom and a silicon atom, two or more hindered phenol-based stabilizers, and an aromatic amine-based stabilizer.
[2] The stabilized conjugated diene polymer according to [1], wherein the conjugated diene polymer contains a tin atom.
[3] The stabilized conjugated diene polymer according to [1] or [2], wherein the conjugated diene polymer contains a functional group interactive with silica.
[4] The stabilized conjugated diene polymer according to any one of [1] to [3], wherein the conjugated diene polymer contains a unit of a vinyl compound containing a functional group interactive with silica.
[5] The stabilized conjugated diene polymer according to [4], wherein the unit of a vinyl compound containing a functional group interactive with silica is a unit represented by General Formula (3) below: 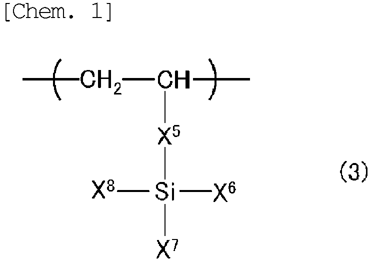 where in General Formula (3) above, X⁵ is a chemical single bond or a hydrocarbylene group, and X⁶, X⁷, and X⁸ are each independently a hydroxyl group, a substituted amino group, a hydrocarbyloxy group, or an optionally substituted hydrocarbyl group.
[6] The stabilized conjugated diene polymer according to any one of [1] to [5], wherein the total content of the hindered phenol-based stabilizers is 0.01 to 2.00 parts by weight relative to 100 parts by weight of the conjugated diene polymer.
[7] The stabilized conjugated diene polymer according to any one of [1] to [6], wherein the content of the aromatic amine-based stabilizer is 0.01 to 2.00 parts by weight relative to 100 parts by weight of the conjugated diene polymer.
[8] The stabilized conjugated diene polymer according to any one of [1] to [7], comprising a hindered phenol-based stabilizer containing a sulfur atom and a hindered phenol-based stabilizer containing no sulfur atom as the hindered phenol-based stabilizers (B).
[9] The stabilized conjugated diene polymer according to any one of [1] to [8], comprising a semi-hindered phenol-based stabilizer and a double-hindered phenol-based stabilizer as the hindered phenol-based stabilizers (B).
[10] The stabilized conjugated diene polymer according to any one of [1] to [9], wherein the ratio of the content of the hindered phenol-based stabilizers (B) to the content of the aromatic amine-based stabilizer (C) is 10:1 to 0.1:1 as a weight ratio represented by "hindered phenol-based stabilizers (B):aromatic amine-based stabilizer (C)".
   The present invention also provides a rubber composition, a cross-linkable rubber composition, a cross-linked rubber, and a tire as described below.
[11] A rubber composition comprising the stabilized conjugated diene polymer according to any one of [1] to [10] and a filler.
[12] A cross-linkable rubber composition comprising the rubber composition according to [11] and a cross-linking agent.
[13] A cross-linked rubber prepared by cross-linking the cross-linkable rubber composition according to [12].
[14] A tire comprising the cross-linked rubber according to [13].

### EFFECTS OF INVENTION

The present invention provides a stabilized conjugated diene polymer having excellent Mooney viscosity stability during storage.

### DESCRIPTION OF EMBODIMENTS

### <Stabilized conjugated diene polymer>

The stabilized conjugated diene polymer according to the present invention is characterized by comprising a conjugated diene polymer containing a tin atom and/or a silicon atom, two or more hindered phenol-based stabilizers, and an aromatic amine-based stabilizer.

### [Conjugated diene polymer (A)]

The conjugated diene polymer (A) used in the present invention contains at least a conjugated diene monomer unit as a monomer unit, and also contains a tin atom and/or a silicon atom in the polymer chain.

The conjugated diene polymer (A) may contain either a tin atom or a silicon atom, or may contain both of them. The conjugated diene polymer (A) preferably contains at least a tin atom, and more preferably contains both a tin atom and a silicon atom.

The tin atom and/or the silicon atom contained in the conjugated diene polymer (A), for example, may be derived from a tin atom-containing coupling agent and/or a silicon atom-containing coupling agent, may be derived from a tin atom-containing monomer and/or derived from a silicon atom-containing monomer, or may be derived from a tin atom-containing modifier and/or a silicon atom-containing modifier (modifiers for modifying a terminal of a polymer chain).

When the conjugated diene polymer (A) contains a tin atom, the tin atom contained in the conjugated diene polymer (A) is preferably derived from a tin atom-containing coupling agent. That is, when the conjugated diene polymer (A) contains a tin atom, the conjugated diene polymer (A) preferably contains a residue of a tin atom-containing coupling agent.

Examples of the tin atom-containing coupling agent include those containing a tin atom among the coupling agents exemplified in production methods described later. Among them, tin tetrachloride is preferred as the tin atom-containing coupling agent.

On the other hand, the conjugated diene polymer (A) contains a silicon atom, the silicon atom contained in the conjugated diene polymer (A) is preferably derived from a silicon atom-containing coupling agent, a silicon atom-containing monomer, a silicon atom-containing modifier, or any of combinations thereof. That is, when the conjugated diene polymer (A) contains a silicon atom, the conjugated diene polymer (A) preferably contains a residue of a silicon atom-containing coupling agent, contains a unit derived from a silicon atom-containing monomer, contains a modifying group derived from a silicon atom-containing modifier, or contains any of combinations thereof. Among these, the conjugated diene polymer (A) more preferably contains at least one of a unit derived from a silicon atom-containing monomer and a modifying group derived from a silicon atom-containing modifier, still more preferably contains at least a unit derived from a silicon atom-containing monomer, and particularly preferably contains a unit derived from a silicon atom-containing monomer and a modifying group derived from a silicon atom-containing modifier.

Examples of the silicon atom-containing coupling agent include those containing a silicon atom among the coupling agents exemplified in production methods described later. Among them, a tri- or higher functional silicon atom-containing coupling agent is preferred, and a tetra- or higher silicon atom-containing coupling agent is more preferred as the silicon atom-containing coupling agent.

Examples of the silicon atom-containing monomer include those containing a silicon atom among various monomers described later. Among them, a vinyl compound containing a silicon atom-containing functional group is preferred, and a compound represented by General Formula (1) is more preferred. When the conjugated diene polymer (A) contains a unit of a silicon atom-containing monomer, the proportion of the unit of a silicon atom-containing monomer in the conjugated diene polymer (A) is preferably 0.001 to 10.000% by weight, more preferably 0.001 to 3.000% by weight, although not particularly limited.

Examples of the silicon atom-containing modifier include silicon atom-containing modifiers as described later. Among them, as the silicon atom-containing modifiers, siloxane compounds and hydrocarbyloxysilane compounds are preferred.

The conjugated diene polymer (A) used in the present invention preferably contains a functional group interactive with silica.

When the conjugated diene polymer (A) contains a functional group interactive with silica, the functional group is preferably derived from a monomer containing the functional group, a modifier containing the functional group, or a combination thereof. That is, when the conjugated diene polymer (A) contains a functional group interactive with silica, the conjugated diene polymer (A) preferably contains a unit derived from a monomer containing the functional group, contains a modifying group derived from a modifier containing the functional group, or contains a combination thereof. Among these, the conjugated diene polymer (A) more preferably contains a unit derived from a monomer containing a functional group interactive with silica. The functional group interactive with silica and a vinyl compound containing the functional group interactive with silica will be described later.

The conjugated diene polymer (A) used in the present invention contains at least a conjugated diene monomer unit. Examples of conjugated diene compounds for forming a conjugated diene monomer unit include 1,3-butadiene, isoprene, 2,3-dimethyl-1,3-butadiene, 2-chloro-1,3-butadiene, 1,3-pentadiene, 1,3-hexadiene, and the like. Among these, preferred are 1,3-butadiene and isoprene, and more preferred is 1,3-butadiene. These may be used alone or in combination.

The proportion of the conjugated diene monomer unit in the conjugated diene polymer (A) is preferably 30 to 100% by weight, more preferably 35 to 95% by weight, still more preferably 40 to 90% by weight, although not particularly limited. When the proportion of the conjugated diene monomer unit is controlled within the ranges above, a stabilized conjugated diene polymer having further improved Mooney viscosity stability during storage can be obtained.

In the conjugated diene polymer (A), the vinyl bond content of the conjugated diene monomer units is preferably 1 to 90 mol%, more preferably 10 to 80 mol%, still more preferably 20 to 70 mol%, further still more preferably 25 to 65 mol%, particularly preferably 30 to 60 mol%. When the vinyl bond content of the conjugated diene monomer units is controlled within the ranges above, a stabilized conjugated diene polymer having further improved Mooney viscosity stability during storage can be obtained.

The conjugated diene polymer (A) used in the present invention is preferably a copolymer containing an aromatic vinyl monomer unit in addition to the conjugated diene monomer unit. Examples of aromatic vinyl monomers for forming the aromatic vinyl monomer unit include styrene, methylstyrene, ethylstyrene, t-butylstyrene, α-methylstyrene, α-methyl-p-methylstyrene, chlorostyrene, bromostyrene, methoxystyrene, dimethylaminomethylstyrene, dimethylaminoethylstyrene, diethylaminomethylstyrene, diethylaminoethylstyrene, cyanoethylstyrene, vinylnaphthalene, and the like. Among these, preferred is styrene. These may be used alone or in combination.

The proportion of the aromatic vinyl monomer unit in the conjugated diene polymer (A) is preferably 0 to 70% by weight, more preferably 5 to 65% by weight, still more preferably 10 to 60% by weight, although not particularly limited. When the proportion of the aromatic vinyl monomer unit is controlled within the ranges above, a stabilized conjugated diene polymer having further improved Mooney viscosity stability during storage can be obtained.

The conjugated diene polymer (A) used in the present invention may also contain a unit of a vinyl compound containing a functional group interactive with silica in addition to the conjugated diene monomer unit and the aromatic vinyl monomer unit optionally contained.

The vinyl compound having a functional group interactive with silica for forming units of a vinyl compound having a functional group interactive with silica can be any compound having a functional group interactive with silica and a vinyl group, and is not particularly limited. For example, compounds described in WO 2019/073828 can be used.

Here, the functional group interactive with silica is a functional group which forms a covalent bond between the functional group and the silica surface or can cause an intermolecular force weaker than a covalent bond (such as ion-dipole interaction, dipole-dipole interaction, hydrogen bond, or van der Waals force). Examples of such a functional group interactive with silica include, but should not be limited to, nitrogen atom-containing functional groups, silicon atom-containing functional groups, oxygen atom-containing functional groups, and the like. Among these, preferred are silicon atom-containing functional groups because they are highly interactive with silica.

In a preferred embodiment of the vinyl compound having a functional group interactive with silica, the vinyl compound having a silicon atom-containing functional group which can be suitably used is, for example, a compound represented by General Formula (1) below:

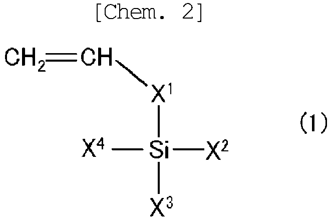

In General Formula (1) above, X¹ is a chemical single bond or a hydrocarbylene group, and X², X³, and X⁴ are each independently a substituted amino group, a hydrocarbyloxy group, or an optionally substituted hydrocarbyl group.

In General Formula (1) above, X¹ is a chemical single bond or a hydrocarbylene group, preferably a chemical single bond. Examples of the hydrocarbylene group include alkylene groups, alkenediyl groups, arylene groups, groups of arylene groups bonded to alkylene groups, and the like. Examples of alkylene groups include a methylene group, an ethylene group, a trimethylene group, and the like. Examples of alkenediyl group include a vinylene group, an ethylene-1,1-diyl group, and the like. Examples of arylene groups include a phenylene group, a naphthylene group, a biphenylene group, and the like. Examples of groups of arylene groups bonded to alkylene groups include a group of a phenylene group bonded to a methylene group, a group of a phenylene group bonded to an ethylene group, and the like. When X¹ is a hydrocarbylene group, X¹ is preferably an arylene group, more preferably a phenylene group.

In General Formula (1) above, X², X³, and X⁴ are each independently a substituted amino group, a hydrocarbyloxy group, or an optionally substituted hydrocarbyl group. It is preferred that at least one of X², X³, and X⁴ be a substituted amino group, and it is more preferred that two of X², X³, and X⁴ be a substituted amino group.

A suitable substituted amino group which can form X2, X3, and X4 is a group represented by General Formula (2) below:

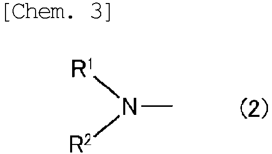

In General Formula (2) above, R¹ and R² may or may not be bonded to each other; if R¹ and R² are not bonded to each other, R¹ and R² are each independently an optionally substituted hydrocarbyl group or a trihydrocarbylsilyl group; and if R¹ and R² are bonded to each other, R¹ and R² are a hydrocarbylene group optionally containing at least one species selected from the group consisting of nitrogen, oxygen, sulfur, and silicon atoms.

Examples of a hydrocarbyl group which can form R¹ and R² include chain alkyl groups such as a methyl group, an ethyl group, an n-propyl group, an isopropyl group, an n-butyl group, an isobutyl group, a sec-butyl group, a tert-butyl group, an n-pentyl group, an n-hexyl group, and an n-octyl group; cyclic alkyl groups such as a cyclopentyl group and a cyclohexyl group; aryl groups such as a phenyl group, a benzyl group, and a naphthyl group; and the like. Among these, preferred are chain alkyl groups, and more preferred is a methyl group or an ethyl group. If the hydrocarbyl group which can form R¹ and R² has a substituent, examples thereof include hydrocarbyl groups having a hydrocarbyloxy group as a substituent, and the like. Examples of a hydrocarbyl group having a hydrocarbyloxy group as a substituent include alkoxyalkyl groups such as a methoxymethyl group, an ethoxymethyl group, and a methoxyethyl group; aryloxyalkyl groups such as a phenoxymethyl group; and the like.

Specific examples of a trihydrocarbylsilyl group which can form R¹ and R² include trialkylsilyl groups such as a trimethylsilyl group, a triethylsilyl group, and a tert-butyldimethylsilyl group, and the like.

If R¹ and R² are bonded to each other, examples of the hydrocarbylene group which can form R¹ and R² include alkylene groups such as a trimethylene group, a tetramethylene group, a pentamethylene group, a hexamethylene group, a heptamethylene group, an octamethylene group, a decamethylene group, a dodecamethylene group, and a 2,2,4-trimethylhexane-1,6-diyl group; alkenediyl groups such as a pentan-2-ene-1,5-diyl group; and the like. If the hydrocarbylene group which can form R¹ and R² contains at least one species selected from the group consisting of nitrogen, oxygen, sulfur, and silicon atoms, examples of the hydrocarbylene group containing at least one species selected from the group consisting of nitrogen, oxygen, sulfur, and silicon atoms include a group represented by -CH=N-CH=CH-, a group represented by - CH=N-CH₂-CH₂-, a group represented by -CH₂-CH₂-O-CH₂-CH₂-, a group represented by -CH₂-CH₂-S-CH₂-CH₂-, a group represented by -CH₂-CH₂-SiH₂-CH₂-CH₂-, a group represented by -CH₂-CH₂-SiMe₂-CH₂-CH₂-, a group represented by -CH₂-CH₂-SiEt₂-CH₂-CH₂-, and the like.

Preferably, R¹ and R² are alkyl groups or are bonded to form an alkylene group. More preferably, R¹ and R² are alkyl groups. Still more preferably, R¹ and R² are a methyl group or an ethyl group.

When R¹ and R² in General Formula (2) above are hydrocarbyl groups, specific examples of groups represented by General Formula (2) above include dialkylamino groups such as a dimethylamino group, a diethylamino group, an ethylmethylamino group, a di-n-propylamino group, a diisopropylamino group, a di-n-butylamino group, a diisobutylamino group, a di-sec-butylamino group, and a di-tert-butylamino group; diarylamino groups such as a diphenylamino group; and the like. Among these, preferred are dialkylamino groups, and more preferred are a dimethylamino group, a diethylamino group, and a di-n-butylamino group.

In General Formula (2) above, if R¹ and R² are each a hydrocarbyl group having a hydrocarbyloxy group as a substituent, specific examples of the group represented by General Formula (2) above include di(alkoxyalkyl)amino groups such as a di(methoxymethyl)amino group and a di(ethoxymethyl)amino group, and the like.

If R¹ and R² in General Formula (2) above are each a trihydrocarbylsilyl group, specific examples of the group represented by General Formula (2) above include trialkylsilyl group-containing amino groups such as a bis(trimethylsilyl)amino group, a bis(tert-butyldimethylsilyl)amino group, and an N-trimethylsilyl-N-methylamino group, and the like.

If R¹ and R² in General Formula (2) above are bonded to each other to form a hydrocarbylene group, specific examples of the group represented by General Formula (2) above include 1-alkyleneimino groups such as a 1-trimethyleneimino group, a 1-pyrrolidino group, a 1-piperidino group, a 1-hexamethyleneimino group, a 1-heptamethyleneimino group, a 1-octamethyleneimino group, a 1-decamethyleneimino group, and a 1-dodecamethyleneimino group, and the like.

If R¹ and R² in General Formula (2) above are bonded to form a hydrocarbylene group containing a nitrogen atom and/or an oxygen atom, specific examples of the group represented by General Formula (2) above include a 1-imidazolyl group, a 4,5-dihydro-1-imidazolyl group, a morpholino group, and the like.

The group represented by General Formula (2) above is preferably a dialkylamino group or a 1-alkyleneimino group. More preferred are dialkylamino groups, and still more preferred are a dimethylamino group, a diethylamino group, and a di-n-butylamino group.

Examples of the hydrocarbyloxy group which can form X², X³, and X⁴ in General Formula (1) above include alkoxy groups such as a methoxy group, an ethoxy group, an n-propoxy group, an isopropoxy group, an n-butoxy group, a sec-butoxy group, and a tert-butoxy group; aryloxy groups such as a phenoxy group and a benzyloxy group; and the like.

Examples of the hydrocarbyl group which can form X², X³, and X⁴ in General Formula (1) above include alkyl groups such as a methyl group, an ethyl group, an n-propyl group, an isopropyl group, an n-butyl group, a sec-butyl group, and a tert-butyl group; aryl groups such as a phenyl group, a 4-methyl-1-phenyl group, and a benzyl group; and the like. If the hydrocarbyl group which can form X², X³, and X⁴ has a substituent, examples thereof include hydrocarbyl groups having a hydrocarbyloxy group as a substituent. Examples thereof include alkoxyalkyl groups such as a methoxymethyl group, an ethoxymethyl group, an ethoxyethyl group, and the like.

If in General Formula (1) above, X¹ is a chemical single bond and one of X², X³, and X⁴ is a substituted amino group, specific examples of the vinyl compound having a silicon atom-containing functional group represented by General Formula (1) above include (dialkylamino)dialkylvinylsilanes such as (dimethylamino)dimethylvinylsilane, (ethylmethylamino)dimethylvinylsilane, (di-n-propylamino)dimethylvinylsilane, (diisopropylamino)dimethylvinylsilane, (dimethylamino)diethylvinylsilane, (ethylmethylamino)diethylvinylsilane, (di-n-propylamino)diethylvinylsilane, and (diisopropylamino)diethylvinylsilane; [bis (trialkylsilyl)amino]dialkylvinylsilanes such as [bis(trimethylsilyl)amino]dimethylvinylsilane, [bis(t-butyldimethylsilyl)amino]dimethylvinylsilane, [bis(trimethylsilyl)amino]diethylvinylsilane, and [bis(t-butyldimethylsilyl)amino]diethylvinylsilane; (dialkylamino)di(alkoxyalkyl)vinylsilanes such as (dimethylamino)di(methoxymethyl)vinylsilane, (dimethylamino)di(methoxyethyl)vinylsilane, (dimethylamino)di(ethoxymethyl)vinylsilane, (dimethylamino)di (ethoxyethyl)vinylsilane, (diethylamino)di(methoxymethyl)vinylsilane, (diethylamino)di(methoxyethyl)vinylsilane, (diethylamino)di(ethoxymethyl)vinylsilane, and (diethylamino)di(ethoxyethyl)vinylsilane; cyclic aminodialkylvinylsilane compounds such as pyrrolidinodimethylvinylsilane, piperidinodimethylvinylsilane, hexamethyleneiminodimethylvinylsilane, 4,5-dihydroimidazolyldimethylvinylsilane, and morpholinodimethylvinylsilane; and the like.

If in General Formula (1) above, X¹ is a hydrocarbylene group and one of X², X³, and X⁴ is a substituted amino group, specific examples of the vinyl compound having a silicon atom-containing functional group represented by General Formula (1) above include (dialkylamino)dialkylvinylphenylsilanes such as (dimethylamino)dimethyl-4-vinylphenylsilane, (dimethylamino)dimethyl-3-vinylphenylsilane, (diethylamino)dimethyl-4-vinylphenylsilane, (diethylamino)dimethyl-3-vinylphenylsilane, (di-n-propylamino)dimethyl-4-vinylphenylsilane, (din-propylamino)dimethyl-3-vinylphenylsilane, (di-n-butylamino)dimethyl-4-vinylphenylsilane, (di-n-butylamino)dimethyl-3-vinylphenylsilane, (dimethylamino)diethyl-4-vinylphenylsilane, (dimethylamino)diethyl-3-vinylphenylsilane, (diethylamino)diethyl-4-vinylphenylsilane, (diethylamino)diethyl-3-vinylphenylsilane, (di-n-propylamino)diethyl-4-vinylphenylsilane, (di-n-propylamino)diethyl-3-vinylphenylsilane, (di-n-butylamino)diethyl-4-vinylphenylsilane, and (di-n-butylamino)diethyl-3-vinylphenylsilane; and the like.

If in General Formula (1) above, X¹ is a chemical single bond and two of X², X³, and X⁴ are substituted amino groups, specific examples of the vinyl compound containing a silicon atom-containing functional group represented by General Formula (1) above include bis(dialkylamino)alkylvinylsilanes such as bis(dimethylamino)methylvinylsilane, bis(diethylamino)methylvinylsilane, bis(di-n-propylamino)methylvinylsilane, bis(di-n-butylamino)methylvinylsilane, bis(dimethylamino)ethylvinylsilane, bis(diethylamino)ethylvinylsilane, bis(di-n-propylamino)ethylvinylsilane, and bis(di-n-butylamino)ethylvinylsilane; bis[bis(trialkylsilyl)amino]alkylvinylsilanes such as bis[bis(trimethylsilyl)amino]methylvinylsilane, bis[bis(tert-butyldimethylsilyl)amino]methylvinylsilane, bis[bis(trimethylsilyl)amino]ethylvinylsilane, and bis[bis(tert-butyldimethylsilyl)amino]ethylvinylsilane; bis(dialkylamino)alkoxyalkylsilanes such as bis(dimethylamino)methoxymethylvinylsilane, bis(dimethylamino)methoxyethylvinylsilane, bis(dimethylamino)ethoxymethylvinylsilane, bis(dimethylamino)ethoxyethylvinylsilane, bis(diethylamino)methoxymethylvinylsilane, bis(diethylamino)methoxyethylvinylsilane, bis(diethylamino)ethoxymethylvinylsilane, and bis(dimethylamino)ethoxyethylvinylsilane; bis(cyclic amino)alkylvinylsilane compounds such as bis(pyrrolidino)methylvinylsilane, bis(piperidino)methylvinylsilane, bis(hexamethyleneimino)methylvinylsilane, bis(4,5-dihydroimidazolyl)methylvinylsilane, and bis(morpholino)methylvinylsilane; and the like.

If in General Formula (1) above, X¹ is a hydrocarbylene group and two of X², X³, and X⁴ are substituted amino groups, specific examples of the vinyl compound having a silicon atom-containing functional group represented by General Formula (1) above include bis(dialkylamino)alkylvinylphenylsilanes such as bis(dimethylamino)methyl-4-vinylphenylsilane, bis(dimethylamino)methyl-3-vinylphenylsilane, bis(diethylamino)methyl-4-vinylphenylsilane, bis(diethylamino)methyl-3-vinylphenylsilane, bis(di-n-propylamino)methyl-4-vinylphenylsilane, bis(di-n-propylamino)methyl-3-vinylphenylsilane, bis(di-n-butylamino)methyl-4-vinylphenylsilane, bis(di-n-butylamino)methyl-3-vinylphenylsilane, bis(dimethylamino)ethyl-4-vinylphenylsilane, bis(dimethylamino)ethyl-3-vinylphenylsilane, bis(diethylamino)ethyl-4-vinylphenylsilane, bis(diethylamino)ethyl-3-vinylphenylsilane, bis(di-n-propylamino)ethyl-4-vinylphenylsilane, bis(di-n-propylamino)ethyl-3-vinylphenylsilane, bis(di-n-butylamino)ethyl-4-vinylphenylsilane, and bis(di-n-butylamino)ethyl-3-vinylphenylsilane, and the like.

If in General Formula (1) above, X¹ is a chemical single bond and three of X², X³, and X⁴ are substituted amino groups, specific examples of the vinyl compound having a silicon atom-containing functional group represented by General Formula (1) above include tris(dialkylamino)vinylsilanes such as tris(dimethylamino)vinylsilane, tris(diethylamino)vinylsilane, tris(di-n-propylamino)vinylsilane, and tris(di-n-butylamino)vinylsilane, and the like.

If in General Formula (1) above, X¹ is a hydrocarbylene group and three of X², X³, and X⁴ are substituted amino groups, specific examples of the vinyl compound having a silicon atom-containing functional group represented by General Formula (1) above include tris(dialkylamino)vinylphenylsilanes such as tris(dimethylamino)-4-vinylphenylsilane, tris(dimethylamino)-3-vinylphenylsilane, tris(diethylamino)-4-vinylphenylsilane, tris(diethylamino)-3-vinylphenylsilane, tris(di-n-propylamino)-4-vinylphenylsilane, tris(din-propylamino)-3-vinylphenylsilane, tris(di-n-butylamino)-4-vinylphenylsilane, and tris(di-n-butylamino)-3-vinylphenylsilane, and the like.

If in General Formula (1) above, X¹ is a chemical single bond and all of X², X³, and X⁴ are not substituted amino groups, specific examples of the vinyl compound having a silicon atom-containing functional group represented by General Formula (1) above include trialkoxyvinylsilanes such as trimethoxyvinylsilane, triethoxyvinylsilane, and tripropoxyvinylsilane; dialkoxyalkylvinylsilanes such as methyldimethoxyvinylsilane and methyldiethoxyvinylsilane; dialkoxyarylvinylsilanes such as di(tert-pentoxy)phenylvinylsilane and di(tert-butoxy)phenylvinylsilane; monoalkoxydialkylvinylsilanes such as dimethylmethoxyvinylsilane; monoalkoxydiarylvinylsilanes such as tert-butoxydiphenylvinylsilane and tert-pentoxydiphenylvinylsilane; monoalkoxyalkylarylvinylsilanes such as tert-butoxymethylphenylvinylsilane and tert-butoxyethylphenylvinylsilane; substituted alkoxyvinylsilane compounds such as tris(β-methoxyethoxy)vinylsilane; and the like.

Among these compounds represented by General Formula (1) above, preferred are those where X¹ is a chemical single bond, more preferred are those where X¹ is a chemical single bond and two of X², X³, and X⁴ are substituted amino groups, and particularly preferred are those where X¹ is a chemical single bond and two of X², X³, and X⁴ are dialkylamino groups.

Among these compounds represented by General Formula (1) above, preferred are bis(dimethylamino)methylvinylsilane, bis(diethylamino)methylvinylsilane, and bis(di-n-butylamino)methylvinylsilane, and particularly preferred is bis(diethylamino)methylvinylsilane.

Examples of vinyl compounds having a functional group interactive with silica other than the compound represented by General Formula (1) above include bis(trialkylsilyl)aminostyrenes such as 4-N,N-bis(trimethylsilyl)aminostyrene and 3-N,N-bis(trimethylsilyl)aminostyrene; bis(trialkylsilyl)aminoalkylstyrenes such as 4-bis(trimethylsilyl)aminomethylstyrene, 3-bis(trimethylsilyl)aminomethylstyrene, 4-bis(trimethylsilyl)aminoethylstyrene, and 3-bis(trimethylsilyl)aminoethylstyrene; and the like.

When the compound represented by General Formula (1) above is used as the vinyl compound having a functional group interactive with silica, the conjugated diene-based polymer (A) includes a unit represented by General Formula (3) below as the unit of the vinyl compound having a functional group interactive with silica:

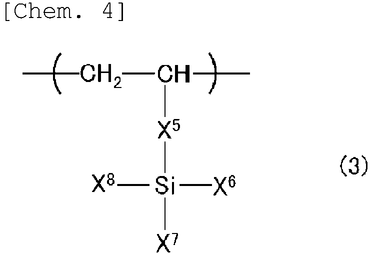

In General Formula (3) above, X⁵ is a chemical single bond or a hydrocarbylene group, and X⁶, X⁷, and X⁸ are each independently a hydroxyl group, a substituted amino group, a hydrocarbyloxy group, or an optionally substituted hydrocarbyl group.

In the unit represented by General Formula (3) above, X⁵ corresponds to X¹ in the compound represented by General Formula (1), and X⁶, X⁷, and X⁸ correspond to X², X³, and X⁴ in the compound represented by General Formula (1), respectively. For this reason, X⁵, X⁶, X⁷, and X⁸ in the unit represented by General Formula (3) above can be the same as those listed for X¹, X², X³, and X⁴ in the compound represented by General Formula (1) above. When the compound represented by General Formula (1) above where at least one of X², X³, and X⁴ is a substituted amino group or a hydrocarbyloxy group is used, at least one of X², X³, and X⁴ can be converted into a hydroxyl group as a result of hydrolysis of the substituted amino group or the hydrocarbyloxy group at any timing in any step.

The proportion of the unit of a vinyl compound containing a functional group interactive with silica in the conjugated diene polymer (A) is preferably 0.001 to 10.000% by weight, more preferably 0.001 to 3.000% by weight relative to 100% by weight of the total amount of total monomer.

The conjugated diene polymer (A) may also contain different monomer units other than the above-described monomer units. Examples of a different compounds forming such different monomer units include α,β-unsaturated nitriles such as acrylonitrile and methacrylonitrile; unsaturated carboxylic acids or acid anhydrides such as acrylic acid, methacrylic acid, and maleic anhydride; unsaturated carboxylate esters such as methyl methacrylate, ethyl acrylate, and butyl acrylate; chain olefin compounds such as ethylene, propylene, and 1-butene; cyclic olefin compounds such as cyclopentene and 2-norbornene; non-conjugated dienes such as 1,5-hexadiene, 1,6-heptadiene, 1,7-octadiene, dicyclopentadiene, and 5-ethylidene-2-norbornene; and the like. These may be used alone or in combination.

The proportion of the different monomer units is preferably 10% by weight less, more preferably 5% by weight less relative to 100% by weight of the total amount of total monomer.

When the conjugated diene polymer (A) contains two or more monomer units, the bonding form of the monomer units can be a variety of bonding forms such as a block form, a tapered form, and a random form, and preferred is a random form. When the bonding form is a random form, a cross-linked rubber having enhanced fuel efficiency can be obtained.

The conjugated diene polymer (A) used in the present invention preferably contains a modifying group formed by modifying a terminal of the polymer chain with a modifier.

A preferred modifying group has a functional group interactive with silica because it can appropriately enhance the compatibility with a filler such as silica and a cross-linked rubber having enhanced strength properties, wear resistance, and fuel efficiency can be obtained. Here, the functional group interactive with silica is a functional group which forms a covalent bond between the functional group and the silica surface or can cause an intermolecular force weaker than a covalent bond (such as ion-dipole interaction, dipole-dipole interaction, hydrogen bond, or van der Waals force). Examples of such a functional group interactive with silica include, but should not be limited to, nitrogen atom-containing functional groups, silicon atom-containing functional groups, oxygen atom-containing functional groups, and the like.

As a modifier for forming a modifying group, preferred are a silicon atom-containing modifier having a silicon atom-containing functional group and a nitrogen atom-containing modifier having a nitrogen atom-containing functional group, and more preferred is a silicon atom-containing modifier because these modifiers are highly interactive with silica. Examples of the silicon atom-containing modifier include siloxane compounds, hydrocarbyloxysilane compounds, and the like.

The hydrocarbyloxysilane compound is more preferably a hydrocarbyloxysilane compound having an amino group, and examples thereof include [3-(dimethylamino)propyl]trimethoxysilane, [3-(diethylamino)propyl]trimethoxysilane, [3-(dimethylamino)propyl]triethoxysilane, [3-(diethylamino)propyl]triethoxysilane, [3-(ethylmethylamino)propyl]trimethoxysilane, [3-(ethylmethylamino)propyl]triethoxysilane, [3-(dimethylamino)propyl]methyldimethoxysilane, [3-(diethylamino)propyl]methyldimethoxysilane, [3-(dimethylamino)propyl]ethyldimethoxysilane, [3-(diethylamino)propyl]ethyldimethoxysilane, [(3-methyl-3-ethylamino)propyl]methyldimethoxysilane, [(3-methyl-3-ethylamino)propyl]ethyldimethoxysilane, [3-(dimethylamino)propyl]methyldiethoxysilane, [3-(diethylamino)propyl]methyldiethoxysilane, [3-(dimethylamino)propyl]ethyldiethoxysilane, [3-(diethylamino)propyl]ethyldiethoxysilane, [3-(ethylmethylamino)propyl]methyldiethoxysilane, [3-(ethylmethylamino)propyl]ethyldiethoxysilane, [3-(benzylmethylamino)propyl]trimethoxysilane, [3-(benzylmethylamino)propyl]triethoxysilane, {3-[di(methoxymethyl)amino]propyl}trimethoxysilane, {3-[di(methoxyethyl)amino]propyl}trimethoxysilane, {3-[di(methoxymethyl)amino]propyl}triethoxysilane, {3-[di(methoxyethyl)amino]propyl}triethoxysilane, {3-[di(ethoxyethyl)amino]propyl}trimethoxysilane, {3-[di(ethoxymethyl)amino]propyl}trimethoxysilane, {3-[di(ethoxyethyl)amino]propyl]triethoxysilane, {3-[di(ethoxymethyl)amino]propyl}triethoxysilane, {3-[N,N-bis(trimethylsilyl)amino]propyl}trimethoxysilane, {3-[N,N-bis(trimethylsilyl)amino]propyl}triethoxysilane, {3-[N,N-bis(t-butyldimethylsilyl)amino]propyl}trimethoxysilane, {3-[N,N-bis(t-butyldimethylsilyl)amino]propyl}triethoxysilane, {3-[N,N-bis(trimethylsilyl)amino]propyl}methyldimethoxysilane, {3-[N,N-bis(trimethylsilyl)amino]propyl}methyldiethoxysilane, {3-[N,N-bis(t-butyldimethylsilyl) amino] propyl }methyldimethoxysilane, {3-[N,N-bis(t-butyldimethylsilyl)amino]propyl}methyldiethoxysilane, [3-(ethylmethylamino)propyl]trimethoxysilane, [3-(ethylmethylamino)propyl]triethoxysilane, [3-(ethylmethylamino)propyl]methyldimethoxysilane, [3-(ethylmethylamino)propyl]ethyldimethoxysilane, [3-(ethylmethylamino)propyl]methyldiethoxysilane, [3-(ethylmethylamino)propyl]ethyldiethoxysilane, and the like. Among these, preferably used are [3-(dimethylamino)propyl]trimethoxysilane, [3-(diethylamino)propyl]trimethoxysilane, [3-(dimethylamino)propyl]triethoxysilane, and [3-(diethylamino)propyl]triethoxysilane.

Examples of the nitrogen atom-containing modifier include N,N-disubstituted aminoalkyl(meth)acrylamides such as dimethylaminoethyl acrylamide, diethylaminoethyl acrylamide, dimethylaminopropyl acrylamide, diethylaminopropyl acrylamide, dimethylaminobutyl acrylamide, diethylaminobutyl acrylamide, dimethylaminoethyl methacrylamide, diethylaminoethyl methacrylamide, dimethylaminopropyl methacrylamide, diethylaminopropyl methacrylamide, dimethylaminobutyl methacrylamide, and diethylaminobutyl methacrylamide; amino group-containing alkoxysilane compounds such as [3-(dimethylamino)propyl]trimethoxysilane, [3-(diethylamino)propyl]trimethoxysilane, [3-(dimethylamino)propyl]triethoxysilane, [3-(diethylamino)propyl]triethoxysilane, [3-(ethylmethylamino)propyl]trimethoxysilane, and [3-(ethylmethylamino)propyl]triethoxysilane; pyrrolidone compounds such as N-phenyl-2-pyrrolidone, N-methyl-2-pyrrolidone, N-ethyl-2-pyrrolidone, and 1-cyclohexyl-2-pyrrolidone; and the like.

The siloxane compound may be any siloxane compound without particular limitation as long as it has a siloxane structure (-Si-O-) as a main chain structure, and preferred is an organosiloxane having an organic group as a side chain, and more preferred is a polyorganosiloxane represented by General Formula (4) below:

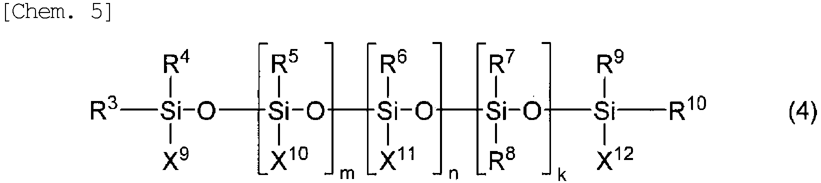

In General Formula (4) above, R³ to R¹⁰ may be the same or different, and are an alkyl group having 1 to 6 carbon atoms or an aryl group having 6 to 12 carbon atoms. X⁹ and X¹² may be the same or different, and are a group selected from the group consisting of an alkyl group having 1 to 6 carbon atoms, an aryl group having 6 to 12 carbon atoms, an alkoxy group having 1 to 5 carbon atoms, and an epoxy group-containing group having 4 to 12 carbon atoms. X¹⁰ is an alkoxy group having 1 to 5 carbon atoms or an epoxy group-containing group having 4 to 12 carbon atoms, and when a plurality of X¹⁰s are present, X¹⁰s may be the same or different. X¹¹ is a group containing 2 to 20 alkylene glycol repeating units, and when a plurality of X¹¹s are present, X¹¹s may be the same or different. "m" is an integer of 0 to 200, "n" is an integer of 0 to 200, "k" is an integer of 0 to 200, and "m+n+k" is 1 or more.

In the polyorganosiloxane represented by General Formula (4) above, examples of the alkyl group having 1 to 6 carbon atoms which can form R³ to R¹⁰, X⁹, and X¹² in General Formula (4) above include a methyl group, an ethyl group, an n-propyl group, an isopropyl group, a butyl group, a pentyl group, a hexyl group, a cyclohexyl group, and the like. Examples of the aryl group having 6 to 12 carbon atoms include a phenyl group, a methylphenyl group, and the like. Among these, preferred are a methyl group and an ethyl group from the viewpoint of easy production of the polyorganosiloxane itself.

Examples of the alkoxy group having 1 to 5 carbon atoms which can form X⁹, X¹⁰, and X¹² in the polyorganosiloxane represented by General Formula (4) above include a methoxy group, an ethoxy group, a propoxy group, an isopropoxy group, a butoxy group, and the like. Among these, preferred are a methoxy group and an ethoxy group from the viewpoint of easy production of the polyorganosiloxane itself.

Examples of the epoxy group-containing group having 4 to 12 carbon atoms which can form X⁹, X¹⁰, and X¹² in the polyorganosiloxane represented by General Formula (4) above include groups represented by General Formula (5) below:

-Z¹-Z²-E¹ (5)

In General Formula (5) above, Z¹ is an alkylene group having 1 to 10 carbon atoms or an alkylarylene group, Z² is a methylene group, a sulfur atom, or an oxygen atom, and E¹ is an epoxy group-containing hydrocarbon group having 2 to 10 carbon atoms.

As the group represented by General Formula (5) above, preferred is a group in which Z² is an oxygen atom, more preferred is a group in which Z² is an oxygen atom and E¹ is a glycidyl group, and still more preferred is a group in which Z¹ is an alkylene group having 1 to 3 carbon atoms, Z² is an oxygen atom, and E¹ is a glycidyl group.

In the polyorganosiloxane represented by General Formula (4) above, X⁹ and X¹² are each preferably an epoxy group-containing group having 4 to 12 carbon atoms or an alkyl group having 1 to 6 carbon atoms among the groups described above. X¹⁰ is preferably an epoxy group-containing group having 4 to 12 carbon atoms among the groups described above. More preferably, X⁹ and X¹² are each an alkyl group having 1 to 6 carbon atoms, and X¹⁰ is an epoxy group-containing group having 4 to 12 carbon atoms.

In the polyorganosiloxane represented by General Formula (4) above, X¹¹, that is, a group containing 2 to 20 alkylene glycol repeating units is preferably a group represented by General Formula (6) below:

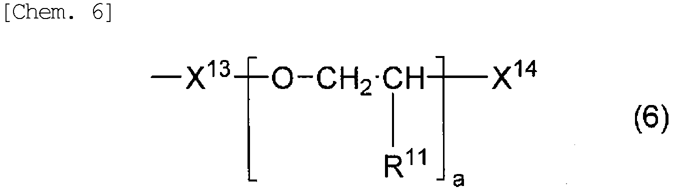

In General Formula (6) above, "a" is an integer of 2 to 20, X¹³ is an alkylene group having 2 to 10 carbon atoms or an alkylarylene group, R¹¹ is a hydrogen atom or a methyl group, and X¹⁴ is an alkoxy group having 1 to 10 carbon atoms or an aryloxy group. Among these, preferred is a group represented by General Formula (6) in which "a" is an integer of 2 to 8, X¹³ is an alkylene group having 3 carbon atoms, R¹¹ is a hydrogen atom, and X¹⁴ is a methoxy group.

In the polyorganosiloxane represented by General Formula (4) above, "m" is an integer of 0 to 200, preferably an integer of 20 to 150, more preferably an integer of 30 to 120. When "m" is 200 or less, the polyorganosiloxane represented by General Formula (4) above can be more easily produced, and can be more easily handled because the viscosity of the polyorganosiloxane itself is not excessively high.

In the polyorganosiloxane represented by General Formula (4) above, "n" is an integer of 0 to 200, preferably an integer of 0 to 150, more preferably an integer of 0 to 120. "k" is an integer of 0 to 200, preferably an integer of 0 to 150, more preferably an integer of 0 to 130. The total number of "m", "n", and "k" is 1 or more, preferably 2 to 400, more preferably 20 to 300, particularly preferably 30 to 250. When the total number of "m", "n", and "k" is 1 or more, in the production process of the conjugated diene polymer (A), a reaction between the polyorganosiloxane represented by General Formula (4) above and an active terminal of a conjugated diene polymer readily proceeds, and when the total number of "m", "n", and "k" is 400 or less, the polyorganosiloxane represented by General Formula (4) above can be easily produced, and can be easily handled because the viscosity of the polyorganosiloxane itself is not excessively high.

As a modifier for forming a modifying group, a nitrogen atom-containing modifier having a nitrogen atom-containing functional group can be used, and, for example, a hydrocarbyloxysilane compound containing a nitrogen atom can be used.

The hydrocarbyloxysilane compound containing a nitrogen atom is a silicon-containing compound containing at least one group containing a nitrogen atom and at least one hydrocarbyloxy group. As such a hydrocarbyloxysilane compound containing a nitrogen atom, compounds described in WO 2019/189204 can be used.

As a hydrocarbyloxysilane compound containing a nitrogen atom, for example, a compound represented by General Formula (7) below can be suitably used.

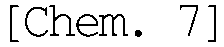

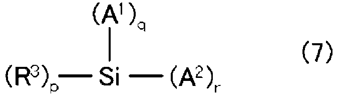

In General Formula (7) above, R³ is a hydrocarbyl group, A¹ is a hydrocarbyloxy group, A² is a group containing a nitrogen atom, p is an integer of 0 to 2, q is an integer of 1 to 3, r is an integer of 1 to 3, and p+q+r=4. The group containing a nitrogen atom represented by A² may be a group containing a primary amino group having active hydrogen atoms and/or a secondary amino group having an active hydrogen atom, or may be a group containing a nitrogen atom other than these.

The hydrocarbyloxysilane compound containing a nitrogen atom suitably used is also a compound represented by General Formula (8) below:

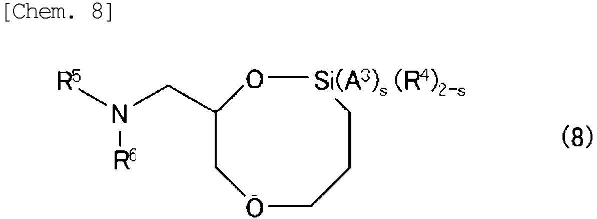

In General Formula (8) above, A³ is a hydrocarbyloxy group; R⁴ is an optionally substituted hydrocarbon group; R⁵ and R⁶ are each independently an optionally substituted hydrocarbon group, and R⁵ and R⁶ may be bonded to each other to form a ring structure together with the nitrogen atom bonded thereto; when R⁵ and R⁶ form a ring structure, these and a heteroatom other than the nitrogen atom bonded thereto as well as the nitrogen atom bonded thereto may form the ring structure. s is an integer of 0 to 2.

The nitrogen atom-containing modifier preferably used is also a carbonyl group-containing compound containing a nitrogen atom. The carbonyl group-containing compound containing a nitrogen atom is a compound having at least one group containing a nitrogen atom and at least one carbonyl group. Although such a carbonyl group-containing compound containing a nitrogen atom is not particularly limited, a compound represented by General Formula (9) below can be suitably used:

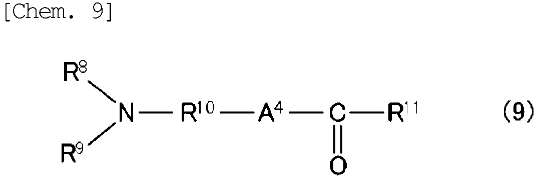

In General Formula (9) above, R⁸ and R⁹ are each independently an optionally substituted hydrocarbyl group, R¹⁰ is a hydrocarbylene group, and R¹¹ is an optionally substituted hydrocarbyl group or a hydrogen atom. A⁴ is a chemical single bond, an oxygen atom, or -NR¹²-(where R¹² is a hydrocarbyl group or a hydrogen atom). R⁸ and R⁹ may be partially bonded to each other to form a hydrocarbylene group optionally having a nitrogen atom and/or an oxygen atom. R¹¹ may be partially bonded to part of R⁸ or R⁹ to form a hydrocarbylene group optionally having a nitrogen atom and/or an oxygen atom.

In R⁸, R⁹, and R¹¹, the optionally substituted hydrocarbyl group indicates a hydrocarbyl group or a substituted hydrocarbyl group. Examples of the substituted hydrocarbyl group include hydrocarbyl groups substituted by a hydrocarbyloxy group, hydrocarbyl groups substituted by a substituted amino group, and the like.

Examples of hydrocarbyl groups include alkyl groups, alkenyl groups, alkynyl groups, aryl groups, aralkyl groups, and the like. Preferred alkyl groups are C₁ to C₁₂ alkyl groups, and examples thereof include methyl, ethyl, n-propyl, isopropyl, n-butyl, sec-butyl, tert-butyl, n-pentyl, n-hexyl, n-octyl, n-dodecyl, cyclopentyl, and cyclohexyl groups, and the like. Preferred alkenyl groups are C₂ to C₁₂ alkenyl groups, and examples thereof include a vinyl group, an allyl group, a 1-propenyl group, an isopropenyl group, and the like. Preferred alkynyl groups are C₂ to C₁₂ alkynyl groups, and examples thereof include an ethynyl group, a 2-propynyl group, and the like. Preferred aryl groups are C₆ to C₁₂ aryl groups, and examples thereof include a phenyl group, a methylphenyl group, an ethylphenyl group, a benzyl group, a tolyl group, a xylyl group, and the like. Preferred aralkyl groups are C₇ to C₁₃ aralkyl groups, and examples thereof include a benzyl group, and the like.

Examples of hydrocarbyl groups substituted by a hydrocarbyloxy group include alkoxyalkyl groups such as a methoxymethyl group, an ethoxymethyl group, an ethoxyethyl group, and the like.

Examples of hydrocarbyl groups substituted by a substituted amino group include (N,N-dialkylamino)alkyl groups, such as an N,N-dimethylaminomethyl group, a 2-(N,N-dimethylamino)ethyl group, a 2-(N,N-diethylamino)ethyl group, a 3-(N,N-dimethylamino)propyl group, and a 3-(N,N-diethylamino)propyl group; (N,N-dialkylamino)aryl groups, such as a 4-(N,N-dimethylamino)phenyl group, a 3-(N,N-dimethylamino)phenyl group, a 4-(N,N-diethylamino)phenyl group, and a 3-(N,N-diethylamino)phenyl group; (N,N-dialkylamino)alkylaryl groups, such as a 4-(N,N-dimethylamino)methylphenyl group and a 4-[2-(N,N-dimethylamino)ethyl]phenyl group; alkyl groups substituted by a cyclic amino group, such as a 3-(1-pyrrolidinyl)propyl group, a 3-(1-piperidinyl)propyl group, and a 3-(1-imidazolyl)propyl group; aryl groups substituted by a cyclic amino group, such as a 4-(1-pyrrolidinyl)phenyl group, a 4-(1-piperidinyl)phenyl group, and a 4-(1-imidazolyl)phenyl group; and alkylaryl groups substituted by a cyclic amino group, such as a 4-[2-(1-pyrrolidinyl)ethyl]phenyl group, a 4-[2-(1-piperidinyl)ethyl]phenyl group, and a 4-[2-(1-imidazolyl)ethyl]phenyl group.

Examples of hydrocarbylene groups for R¹⁰ include alkylene groups, alkenediyl groups, arylene groups, arylene-alkylene groups, and the like. Examples of alkylene groups include a methylene group, an ethylene group, a propylene group, a tetramethylene group, a pentamethylene group, a hexamethylene group, a heptamethylene group, an octamethylene group, a 2,2,4-trimethylhexane-1,6-diyl group, and the like. Examples of alkenediyl groups include a pentan-2-ene-1,5-diyl group, and the like. Examples of arylene groups include a phenylene group, a naphthylene group, a biphenylene group, and the like. Examples of arylene-alkylene groups include a phenylene-alkylene group, a naphthylene-alkylene group, a biphenylene-alkylene group, and the like.

In General Formula (9) above, A⁴ is a chemical single bond, an oxygen atom, or -NR¹²- (where R¹² is a hydrocarbyl group or a hydrogen atom). A⁴ is preferably an oxygen atom or a group represented by -NR¹²-(where R¹² is a hydrocarbylene group having 1 or more and 5 or less carbon atoms or a hydrogen atom), more preferably an oxygen atom or a group represented by -NH-, still more preferably a group represented by -NH-.

Examples of compounds represented by General Formula (9) above include those where A⁴ is an oxygen atom, such as 2-(dihydrocarbylamino)ethyl acrylates such as 2-(dimethylamino)ethyl acrylate and 2-(diethylamino)ethyl acrylate; 3-(dihydrocarbylamino)propyl acrylates such as 3-(dimethylamino)propyl acrylate; 2-(dihydrocarbylamino)ethyl methacrylates such as 2-(dimethylamino)ethyl methacrylate and 2-(diethylamino)ethyl methacrylate; 3-(dihydrocarbylamino)propyl methacrylates such as 3-(dimethylamino)propyl methacrylate; and the like.

Further examples of compounds represented by General Formula (9) above include those where A⁴ is -NR¹²- (where R¹² is a hydrocarbyl group or a hydrogen atom), such as N-(2-dihydrocarbylaminoethyl)acrylamides such as N-(2-dimethylaminoethyl)acrylamide and N-(2-diethylaminoethyl)acrylamide; N-(3-dihydrocarbylaminopropyl)acrylamides such as N-(3-dimethylaminopropyl)acrylamide and N-(3-diethylaminopropyl)acrylamide; N-(4-dihydrocarbylaminobutyl)acrylamides such as N-(4-dimethylaminobutyl)acrylamide and N-(4-diethylaminobutyl)acrylamide; N-(2-dihydrocarbylaminoethyl)methacrylamides such as N-(2-dimethylaminoethyl)methacrylamide and N-(2-diethylaminoethyl)methacrylamide; N-(3-dihydrocarbylaminopropyl)methacrylamides such as N-(3-dimethylaminopropyl)methacrylamide and N-(3-diethylaminopropyl)methacrylamide; N-(4-dihydrocarbylaminobutyl)methacrylamides such as N-(4-dimethylaminobutyl)methacrylamide and N-(4-diethylaminobutyl)methacrylamide; and the like. Among these, preferred are N-(3-dihydrocarbylaminopropyl)acrylamides, and more preferred is N-(3-dimethylaminopropyl)acrylamide.

The weight average molecular weight (Mw) of the conjugated diene polymer (A) used in the present invention is preferably 50,000 to 5,000,000, more preferably 75,000 to 3,000,000, particularly preferably 100,000 to 1,000,000 as determined by gel permeation chromatography relative to polystyrene standards, although not particularly limited. When the weight average molecular weight (Mw) of the conjugated diene polymer (A) is controlled within the ranges above, a stabilized conjugated diene polymer having further improved Mooney viscosity stability during storage can be obtained.

The conjugated diene polymer (A) used in the present invention has a molecular weight distribution of preferably 1.1 to 3.0, more preferably 1.2 to 2.5, particularly preferably 1.2 to 2.2, the molecular weight distribution being represented as a ratio (Mw/Mn) of the weight average molecular weight (Mw) to the number average molecular weight (Mn). When the molecular weight distribution (Mw/Mn) of the conjugated diene polymer (A) is controlled within the ranges above, a stabilized conjugated diene polymer having further improved Mooney viscosity stability during storage can be obtained.

The Mooney viscosity (ML1+4, 100°C) of the conjugated diene polymer (A) used in the present invention is preferably 10 to 200, more preferably 15 to 150, still more preferably 20 to 100, particularly preferably 25 to 80, although not particularly limited. When the Mooney viscosity is controlled within the ranges above, a stabilized conjugated diene polymer having further improved Mooney viscosity stability during storage can be obtained. The Mooney viscosity (ML1+4, 100°C) is measured according to JIS K6300.

The glass transition temperature (Tg) of the conjugated diene polymer (A) used in the present invention is preferably -100°C to 20°C, more preferably -70°C to 10°C, although not particularly limited. The glass transition temperature of the conjugated diene polymer (A) used in the present invention can be appropriately adjusted, for example, by controlling the content of the aromatic vinyl monomer unit in the conjugated diene polymer (A) and the vinyl bond content of the conjugated diene monomer units.

### [Hindered phenol-based stabilizer (B)]

The hindered phenol-based stabilizer (B) used in the present invention is a stabilizer added to the conjugated diene polymer (A).

The hindered phenol-based stabilizer (B) is a stabilizer comprising a phenolic compound which has a phenol structure (i.e., a structure which has a benzene ring and contains an OH group attached to the benzene ring), and has a hindered group at at least one of position 2 and position 6 with respect to the OH group (phenolic hydroxy group) of the phenol structure. The hindered group may be any group without particular limitation as long as it is a bulky group, and examples thereof include substituents having 4 or more carbon atoms. Specific examples of the hindered group include tertiary alkyl groups such as a t-butyl group, a t-pentyl group, and a t-hexyl group; secondary alkyl groups such as a sec-butyl group and a sec-pentyl group; branched primary alkyl groups such as an i-butyl group and an i-pentyl group; cycloalkyl groups such as a cyclohexyl group and a cyclopentyl group; alkyl groups substituted by an alkylthio group such that the total number of carbon atoms in the group is 4 or more, such as an octylthio group and an octylthiomethyl group; and the like.

Examples of the hindered phenol-based stabilizer (B) include hindered phenol-based stabilizers containing a sulfur atom and hindered phenol-based stabilizers containing no sulfur atom. Preferably, at least a hindered phenol-based stabilizer containing a sulfur atom is used as a hindered phenol-based stabilizer (B).

Examples of the hindered phenol-based stabilizer containing a sulfur atom include 2,4-bis[(octylthio)methyl]-o-cresol, 2,4-bis[(dodecylthio)methyl]-o-cresol, 4,4'-butylidenebis-(3-methyl-6-tertbutylphenol), 2,4-bis(n-octylthio)-6-(4-hydroxy-3,5-di-tert-butylanilino)-1,3,5-triazine, 2,2-thio-diethylenebis[3-(3,5-di-tert-butyl-4-hydroxyphenyl)propionate], and the like. Among these, preferred is 2,4-bis[(octylthio)methyl]-o-cresol. These may be used alone or in combination.

Examples of the hindered phenol-based stabilizer containing no sulfur atom include poly(oxy-1,2-ethanediyl)-α-[3-[3,5-bis(1,1-dimethylethyl)-4-hydroxyphenyl]-1-oxopropyl]-ω-[3-[3,5-bis(1,1-dimethylethyl)-4-hydroxyphenyl]-1-oxopropoxy], octyl-3,5-di-tert-butyl-4-hydroxy-hydrocinnamate, C7-C9-branched alkyl 3,5-bis(1,1-dimethylethyl)-4-hydroxybenzenepropanoate esters, 4,4'-butylidenebis-(3-methyl-6-tert-butylphenol), an octadecyl 3,5-bis(1,1-dimethylethyl)-4-hydroxybenzenepropanoate ester, pentaerythritol tetrakis(3-(3,5-di-tert-butyl-4-hydroxyphenyl)propionate), triethylene glycol-bis[3-(3-tert-butyl-5-methyl-4-hydroxyphenyl)propionate], tris-(3,5-di-tert-butyl-4-hydroxybenzyl)-isocyanurate, and the like. Among these, preferred is octyl-3,5-di-tert-butyl-4-hydroxy-hydrocinnamate. These may be used alone or in combination.

Examples of the hindered phenol-based stabilizer (B) include a double-hindered phenol-based stabilizer, a semi-hindered phenol-based stabilizer, a less-hindered phenol-based stabilizer, and the like. Preferably, at least a semi-hindered phenol-based stabilizer is used as a hindered phenol-based stabilizer (B).

Here, the double-hindered phenol-based stabilizer is a phenol-based stabilizer which has hindered groups at both position 2 and position 6 (i.e., two ortho positions) with respect to the OH group (phenolic hydroxy group) of the phenol structure. The semi-hindered phenol-based stabilizer is a phenol-based stabilizer which has a hindered group at one of position 2 and position 6 with respect to the OH group (phenolic hydroxy group) of the phenol structure and has an alkyl group having 3 or less carbon atoms, such as a methyl group (preferably a methyl group), at the other position. The less-hindered phenol-based stabilizer is a phenol-based stabilizer which has a hindered group at one of position 2 and position 6 with respect to the OH group (phenolic hydroxy group) of the phenol structure.

The stabilized conjugated diene polymer according to the present invention comprises two or more hindered phenol-based stabilizers (B). In one embodiment of the present invention, the stabilized conjugated diene polymer preferably comprises one or more hindered phenol-based stabilizers containing a sulfur atom and one or more hindered phenol-based stabilizers containing no sulfur atom as the hindered phenol-based stabilizers (B). Alternatively, in one embodiment of the present invention, the stabilized conjugated diene polymer preferably comprises one or more semi-hindered phenol-based stabilizers and one or more double-hindered phenol-based stabilizers as hindered phenol-based stabilizers (B).

The total content of the two or more hindered phenol-based stabilizers (B) is preferably 0.01 to 2.00 parts by weight, more preferably 0.10 to 1.00 part by weight, still more preferably 0.20 to 0.80 parts by weight relative to 100 parts by weight of the conjugated diene polymer (A).

When the stabilized conjugated diene polymer comprises a hindered phenol-based stabilizer containing a sulfur atom, the content of the hindered phenol-based stabilizer containing a sulfur atom is preferably 0.01 to 1.00 part by weight, more preferably 0.05 to 0.50 parts by weight, still more preferably 0.10 to 0.30 parts by weight relative to 100 parts by weight of the conjugated diene polymer (A).

When the stabilized conjugated diene polymer comprises a hindered phenol-based stabilizer containing no sulfur atom, the content of the hindered phenol-based stabilizer containing no sulfur atom is preferably 0.01 to 1.00 part by weight, more preferably 0.10 to 0.80 parts by weight, still more preferably 0.20 to 0.60 parts by weight relative to 100 parts by weight of the conjugated diene polymer (A).

When the stabilized conjugated diene polymer comprises a hindered phenol-based stabilizer containing a sulfur atom and a hindered phenol-based stabilizer containing no sulfur atom, the ratio of the contents of these stabilizers is preferably 1:10 to 1:0.1, more preferably 1:5 to 1:0.5, still more preferably 1:3 to 1:1 as a weight ratio represented by "hindered phenol-based stabilizer containing a sulfur atom:hindered phenol-based stabilizer containing no sulfur atom".

When the stabilized conjugated diene polymer comprises a semi-hindered phenol-based stabilizer, the content of the semi-hindered phenol-based stabilizer is preferably 0.01 to 1.00 part by weight, more preferably 0.05 to 0.50 parts by weight, still more preferably 0.10 to 0.30 parts by weight relative to 100 parts by weight of the conjugated diene polymer (A).

When the stabilized conjugated diene polymer comprises a double-hindered phenol-based stabilizer, the content of the double-hindered phenol-based stabilizer is preferably 0.01 to 1.00 part by weight, more preferably 0.10 to 0.80 parts by weight, still more preferably 0.20 to 0.60 parts by weight relative to 100 parts by weight of the conjugated diene polymer (A).

When the stabilized conjugated diene polymer comprises a semi-hindered phenol-based stabilizer and a double-hindered phenol-based stabilizer, the ratio of the contents of these stabilizers is preferably 1:10 to 1:0.1, more preferably 1:5 to 1:0.5, still more preferably 1:3 to 1:1 as a weight ratio represented by "semi-hindered phenol-based stabilizer:double-hindered phenol-based stabilizer".

### [Aromatic amine-based stabilizer (C)]

The aromatic amine-based stabilizer (C) used in the present invention is a stabilizer added to the conjugated diene polymer (A).

Specifically, as the aromatic amine-based stabilizer (C), it is preferred that one or more compounds be selected from N,N'-di-sec-butyl-1,4-phenylenediamine, a reaction product of N-phenylbenzeneamine and 2,4,4-trimethylpentene, bis(4-octylphenyl)amine, 4,4'-bis(α,α-dimethylbenzyl)diphenylamine, N,N'-di-2-naphthyl-p-phenylenediamine, N,N'-diphenyl-p-phenylenediamine, N-phenyl-N'-isopropyl-p-phenylenediamine, N-phenyl-N'-(1,3-dimethylbutyl)-p-phenylenediamine, N-phenyl-N'-(3-methacryloyloxy-2-hydroxypropyl)-p-phenylenediamine, and N,N'-bis(methyl-phenyl)-1,4-benzenediamine. More preferably, the aromatic amine-based stabilizer (C) is a reaction product of N-phenylbenzeneamine and 2,4,4-trimethylpentene.

The content of the aromatic amine-based stabilizer (C) used in the present invention is preferably 0.01 to 2.00 parts by weight, more preferably 0.10 to 1.00 part by weight, still more preferably 0.12 to 0.50 parts by weight relative to 100 parts by weight of the conjugated diene polymer (A), although not particularly limited.

The total content of the two or more hindered phenol-based stabilizers (B) and the aromatic amine-based stabilizer (C) in the stabilized conjugated diene polymer is preferably 0.10 to 2.00 parts by weight, more preferably 0.20 to 1.20 parts by weight relative to 100 parts by weight of the conjugated diene polymer (A), although not particularly limited.

The ratio of the content of the hindered phenol-based stabilizer (B) to the content of the aromatic amine-based stabilizer (C) is preferably 10:1 to 0.1:1, more preferably 6:1 to 1:1, still more preferably 4:1 to 2:1 as a weight ratio represented by "hindered phenol-based stabilizer (B):aromatic amine-based stabilizer (C)".

### <Method of producing stabilized conjugated diene polymer>

The stabilized conjugated diene polymer according to the present invention can be produced by adding the hindered phenol-based stabilizer (B) and the aromatic amine-based stabilizer (C) to the conjugated diene polymer (A).

The stabilized conjugated diene polymer according to the present invention is preferably produced by preparing a solution of the conjugated diene polymer (A) by solution polymerization, mixing the solution, the hindered phenol-based stabilizer (B), and the aromatic amine-based stabilizer (C), and then removing volatile components from the resulting mixed solution.

The conjugated diene polymer (A) used in the present invention can be prepared by polymerizing a monomer mixture containing at least a conjugated diene compound in an inert solvent in the presence of a polymerization initiator, for example. The conjugated diene polymer (A) is preferably polymerized by solution polymerization.

Examples of the conjugated diene compound contained in the monomer mixture include the same conjugated diene compounds as those exemplified as the conjugated diene compounds which can be used to form the above-described conjugated diene polymer (A). Furthermore, the monomer mixture may contain the aromatic vinyl monomer, the vinyl compound having a functional group interactive with silica, and the different monomers described above as needed.

Any inert solvent can be used in polymerization as long as it is usually used in solution polymerization and does not inhibit the polymerization reaction. Specific examples of the inert solvent include chain aliphatic hydrocarbons such as butane, pentane, hexane, heptane, and 2-butene; alicyclic hydrocarbons such as cyclopentane, cyclohexane, and cyclohexene; aromatic hydrocarbons such as benzene, toluene, and xylene; and the like. These inert solvents may be used alone or in combination. The inert solvent is used in an amount providing a monomer concentration of 1 to 50% by weight, preferably 10 to 40% by weight, for example.

Any polymerization initiator can be used in polymerization as long as it can catalyze polymerization of the monomer mixture containing the conjugated diene compound. Specific examples thereof include polymerization initiators containing an organic alkali metal compound, an organic alkaline earth metal compound, or a lanthanum-series metal compound as a primary catalyst. Examples of organic alkali metal compounds include organic lithium compounds, organic sodium compounds, organic potassium compounds, and the like, and specifically include organic monolithium compounds such as n-butyllithium, sec-butyllithium, t-butyllithium, hexyllithium, phenyllithium, and stilbenelithium; organic polyvalent lithium compounds such as dilithiomethane, 1,4-dilithiobutane, 1,4-dilithio-2-ethylcyclohexane, 1,3,5-trilithiobenzene, and 1,3,5-tris(lithiomethyl)benzene; organic sodium compounds such as sodium naphthalene; organic potassium compounds such as potassium naphthalene; and the like. Examples of organic alkaline earth metal compounds include di-n-butylmagnesium, di-n-hexylmagnesium, diethoxycalcium, calcium distearate, di-t-butoxystrontium, diethoxybarium, diisopropoxybarium, diethylmercaptobarium, di-t-butoxybarium, diphenoxybarium, diethylaminobarium, barium distearate, diketylbarium, and the like. Examples of polymerization initiators containing a lanthanum-series metal compound as a primary catalyst include polymerization initiators containing a lanthanum-series metal salt of a lanthanum-series metal, such as lanthanum, cerium, praseodymium, neodymium, samarium, or gadolinium, and a carboxylic acid, a phosphorus-containing organic acid, or the like as a primary catalyst, and a cocatalyst such as an alkylaluminum compound, an organic aluminum hydride compound, or an organic aluminum halide compound, and the like. Among these polymerization initiators, preferably used are organic monolithium compounds and organic polyvalent lithium compounds, more preferably used are organic monolithium compounds, and particularly preferably used is n-butyllithium. The organic alkali metal compounds may be preliminarily reacted with a secondary amine compound such as dibutylamine, dihexylamine, dibenzylamine, pyrrolidine, piperidine, hexamethyleneimine, or heptamethyleneimine, and used as organic alkali metal amide compounds. When an organic alkali metal amide compound is used as a polymerization initiator, a cross-linked rubber having more excellent fuel efficiency and wear resistance can be obtained. These polymerization initiators may be used alone or in combination.

Although the amount of the polymerization initiator may be determined according to the desired molecular weight distribution curve of the conjugated diene polymer (A), the amount is in the range of usually 1 to 50 mmol, preferably 1.5 to 20 mmol, more preferably 2 to 15 mmol per 1000 g of monomer.

After polymerization is started in the presence of the polymerization initiator, a polymerization initiator re-addition operation may be performed, the operation comprising further adding the polymerization initiator to the polymerization system to continue the polymerization. The timing of the polymerization initiator re-addition operation and the number of times thereof are not particularly limited, and may be determined according to the desired molecular weight distribution curve of the conjugated diene polymer (A). The re-addition operation is performed preferably at a timing when the polymerization conversion ratio reaches 10 to 90%, more preferably 30 to 70%. The vinyl compound having a functional group interactive with silica, which has high processability, is preferably copolymerized after the re-addition operation is completed. Although the amount of the polymerization initiator per one re-addition operation is not particularly limited and may be determined according to the desired molecular weight distribution curve of the conjugated diene polymer (A), the amount is preferably 1 to 99 mol, more preferably 1.2 to 20 mol relative to 1 mol of the polymerization initiator used to start polymerization.

The polymerization temperature is in the range of usually -80 to +150°C, preferably 0 to 100°C, more preferably 30 to 90°C. The polymerization can be performed in any manner such as a batch or continuous mode. Preferred is a batch method because randomness in bonding of the conjugated diene monomer units and the aromatic vinyl monomer units can be readily controlled.

In polymerization of the monomer mixture containing the conjugated diene compound, a polar compound is preferably added to an inert organic solvent to control the vinyl bond content of conjugated diene monomer units in the conjugated diene polymer (A) to be prepared. Examples of the polar compound include ether compounds such as dibutyl ether and tetrahydrofuran; tertiary amines such as tetramethylethylenediamine; alkali metal alkoxides; phosphine compounds; and the like. Among these, preferred are ether compounds and tertiary amines, and more preferred are tetramethylethylenediamine, ethylene glycol diethyl ether, and ethylene glycol dibutyl ether. These polar compounds may be used alone or in combination. The amount of the polar compound to be used may be determined according to the desired vinyl bond content, and is preferably 0.001 to 100 mol, more preferably 0.01 to 10 mol relative to 1 mol of the polymerization initiator. When the amount of the polar compound falls within the ranges above, control of the vinyl bond content of the conjugated diene monomer units is facilitated, and failure caused by deactivation of the polymerization initiator hardly occurs.

The conjugated diene polymer (A) used in the present invention may be obtained by a method comprising a step of polymerizing a monomer (a1) including isoprene by a polymerization initiator in an inert solvent to form a polymer block (A1) having an active terminal, and a step of mixing the polymer block (A1) having an active terminal with a monomer (a2) including 1,3-butadiene and continuing the polymerization reaction to form the polymer block (A1) including an isoprene monomer unit and a polymer block (A2) including a 1,3-butadiene monomer unit which are serially linked to each other. As such a production method, for example, a production method described in WO 2019/073828 can be used.

When such a production method is used, the conjugated diene polymer (A) may contain the polymer block (A1) including an isoprene monomer unit and the polymer block (A2) including a 1,3-butadiene monomer unit which are serially linked to each other.

The monomer (a1) for forming the polymer block (A1) may be any monomer containing isoprene, and a monomer corresponding to the monomer composition of a desired polymer block (A1) can be used.

The polymer block (A1) may be any polymer block without particular limitation as long as it contains an isoprene monomer unit, and may consist only of an isoprene monomer unit or may consist of an isoprene monomer unit and a monomer unit other than the isoprene monomer unit. In this case, preferred example of the monomer unit other than the isoprene monomer unit include an aromatic vinyl monomer unit, and the polymer block (A1) preferably contains an aromatic vinyl monomer unit in addition to an isoprene monomer unit.

The polymer block (A2) may be any polymer block without particular limitation as long as it contains a 1,3-butadiene monomer unit, and may consist only of a 1,3-butadiene monomer unit or may consist of a 1,3-butadiene monomer unit and a monomer unit other than the 1,3-butadiene monomer unit. In this case, preferred examples of the monomer unit other than the 1,3-butadiene monomer unit include an aromatic vinyl monomer unit, and the polymer block (A2) preferably contains an aromatic vinyl monomer unit in addition to a 1,3-butadiene monomer unit.

Preferably, at least one of the polymer block (A1) and the polymer block (A2) contains a unit of a vinyl compound containing a functional group interactive with silica, and more preferably, at least the polymer block (A2) contains a unit of a vinyl compound containing a functional group interactive with silica.

The polymer block (A2) is formed so as to be serially linked to the polymer block (A1) by mixing the polymer block (A1) having an active terminal described above and the monomer (a2) including 1,3-butadiene, and continuing the polymerization reaction. The resulting polymer block (A2) has an active terminal. On the other hand, the active terminal of the polymer block (A1) is consumed.

The weight ratio of the polymer block (A1) to the polymer block (A2) (weight of polymer block (A1)/weight of polymer block (A2) (when a plurality of polymer blocks (A1) and a plurality of polymer blocks (A2) are present, the weight ratio is based on the total weights thereof) is preferably 0.001 to 0.2, more preferably 0.005 to 0.1, particularly preferably 0.01 to 0.05.

As described above, conjugated diene polymer chains can be prepared in an inert solvent. The conjugated diene polymer chains thus prepared usually have an active terminal.

The conjugated diene polymer chains having an active terminal are preferably reacted with a coupling agent to form coupled polymer chains. Examples of the coupling agent include, but should not be limited to, silicon tetrachloride, methyltrichlorosilane, dimethyldichlorosilane, trimethylchlorosilane, tin tetrachloride, methyltrichlorotin, dimethyldichlorotin, trimethylchlorotin, tetramethoxysilane, methyltrimethoxysilane, dimethoxydimethylsilane, methyltriethoxysilane, ethyltrimethoxysilane, dimethoxydiethylsilane, diethoxydimethylsilane, tetraethoxysilane, ethyltriethoxysilane, diethoxydiethylsilane, bis(trichlorosilyl)methane, 1,2-bis(trichlorosilyl)ethane, 1,3-bis(trichlorosilyl)propane, 1,4-bis(trichlorosilyl)butane, 1,5-bis(trichlorosilyl)pentane, 1,6-bis(trichlorosilyl)hexane, and the like. Although the coupling agent may be selected according to the desired molecular weight distribution curve of the conjugated diene polymer (A), preferred is use of a tri- or higher functional coupling agent, more preferred is use of a tetra- or higher functional coupling agent, and particularly preferred is use of tin tetrachloride.

When a coupling agent is used, preferably, the polymer chains having an active terminal prepared by the above-described polymerization method are partially converted into coupled polymer chains by a coupling reaction to prepare a solution containing polymer chains having an active terminal and coupled polymer chains. In this case, the amount of the coupling agent used is not particularly limited, and may be selected according to the desired molecular weight distribution curve of the conjugated diene polymer (A). The amount thereof is preferably 0.01 to 0.4 mol, more preferably 0.02 to 0.3 mol in terms of the functional group of the coupling agent relative to 1 mol of the polymerization initiator used to start polymerization. As a result of addition of the coupling agent, the active terminals of the polymer chains having an active terminal are reacted in the coupling reaction, and thus the active terminals are consumed in the coupled polymer chains, and polymer chains without an active terminal are formed. On the other hand, noncoupled polymer chains keep their active terminals.

The active terminals contained in the conjugated diene polymer chains prepared through polymerization or active terminals which can be contained in the conjugated diene polymer chains after the coupling reaction are preferably reacted with a modifier to prepare a conjugated diene polymer containing a modifying group from the conjugated diene polymer (A). Examples of the modifiers to be used include the above-described modifiers for forming a modifying group which can be contained in the conjugated diene polymer (A) used in the present invention.

When the modifier is reacted with the active terminals of the conjugated diene polymer chains, the amount of the modifier is not particularly limited, and is preferably 0.01 to 10.0 mol, more preferably 0.02 to 5.0 mol, particularly preferably 0.05 to 2.0 mol relative to 1 mol of the active terminal in the polymer chains having an active terminal (relative to 1 mol of the metal atom in the organic alkali metal compound when the organic alkali metal compound is used as the polymerization initiator). Examples of the modifiers to be used include the above-described modifiers, and these modifiers may be used alone or in combination.

Examples of the method of reacting the modifier with the active terminals of the conjugated diene polymer chains include, but should not be limited to, a method of mixing the modifier and the polymer chains having an active terminal in a solvent which can dissolve these, and the like. Examples of the solvent used at this time include those listed as the solvents used in polymerization, and the like. At this time, for its simplicity, preferred is a method of adding the modifier to the polymerization solution used in the polymerization while the polymerization solution contains the resulting polymer chains having an active terminal as they are. At this time, the modifier may be added to the polymerization system in the form of a solution in an inert solvent used in the polymerization above, and the solution concentration is preferably in the range of 1 to 50% by weight. The reaction temperature is not particularly limited, and is usually 0 to 120°C. The reaction time is not particularly limited, and is usually 1 minute to 1 hour.

The modifier can be added to the solution containing polymer chains having an active terminal at any timing. Desirably, the modifier is added to the solution while the polymerization reaction has not completed and the solution containing polymer chains having an active terminal also contains the monomer, more specifically, the solution containing polymer chains having an active terminal contains 100 ppm or more, more preferably 300 to 50,000 ppm of the monomer. Such addition of the modifier can suppress a secondary reaction between the polymer chains having an active terminal and impurities contained in the polymerization system, and enables successful control of the reaction.

A polymerization terminator, such as an alcohol such as methanol or isopropanol or water, is preferably added to the active terminals of the conjugated diene polymer chains prepared through the polymerization or the active terminals which can be left after the reaction with the coupling agent and the modifier, as needed, to deactivate unreacted active terminals.

Then, the conjugated diene polymer according to the present invention can be produced by mixing the solution of the conjugated diene polymer (A) obtained by the above method, the hindered phenol-based stabilizer (B), and the aromatic amine-based stabilizer (C), and then removing volatile components from the resulting mixed solution.

Examples of the method for removing volatile components from a mixed solution include steam stripping, heating the mixed solution under reduced pressure, and the like.

Two or more conjugated diene polymers having different monomer compositions, different molecular structures, different molecular weight distribution curves, and the like may be mixed as desired to prepare the conjugated diene polymer (A) used in the present invention. In mixing of the two or more conjugated diene polymers, the two or more conjugated diene polymers may be mixed in the form of polymer solutions, or may be mixed in the form of solids. Preferred is mixing of the two or more conjugated diene polymers in the form of solutions. Specifically, it is more preferred that two or more solutions of conjugated diene polymers be separately prepared, and the solutions be mixed.

### <Rubber composition>

The rubber composition according to the present invention contains the stabilized conjugated diene polymer according to the present invention described above, and a filler.

The rubber composition according to the present invention may contain other polymers than the conjugated diene polymer (A). Examples of the other polymers include natural rubbers (these may be reformed natural rubbers such as epoxidized natural rubber (ENR), hydrogenated natural rubber (HNR), deproteinized natural rubbers (DPNR), high purity natural rubbers (UPNR), and grafted natural rubbers), polyisoprene rubbers, emulsion polymerized styrene-butadiene copolymer rubbers, solution polymerized styrene-butadiene copolymer rubbers, polybutadiene rubbers (those may be high-cis-BR or low-cis-BR, or may be polybutadiene rubbers containing crystal fibers made of a 1,2-polybutadiene polymer), styrene-isoprene copolymer rubbers, butadiene-isoprene copolymer rubbers, styrene-isoprene-butadiene copolymer rubbers, acrylonitrile-butadiene copolymer rubbers, acrylonitrile-styrene-butadiene copolymer rubbers, butyl rubbers (IIR), ethylene-propylene copolymers, chloroprene rubbers, nitrile chloroprene rubbers, nitrile isoprene rubbers, and the like, and exclude the above-described conjugated diene polymers (A). Among these, preferred are natural rubbers, polyisoprene rubbers, polybutadiene rubbers, and solution polymerized styrene-butadiene copolymer rubbers. More preferred are polybutadiene rubbers. These polymers can be used alone or in combination, such as a combination of a natural rubber and a polybutadiene rubber or that of a natural rubber and a styrene-butadiene copolymer rubber.

In the rubber composition according to the present invention, the conjugated diene polymer (A) in the stabilized conjugated diene polymer according to the present invention preferably accounts for 10 to 100% by weight of the polymer ingredients in the rubber composition, and particularly preferably accounts for 50 to 100% by weight.

Examples of the filler include silica, calcium silicate, aluminum silicate, carbon black, calcium carbonate, talc, aluminum hydroxide, alumina, clay, mica, and the like. Among these, preferred are carbon black and silica, and more preferred is silica because a cross-linked rubber having further improved low-temperature properties and bloom resistance can be obtained. These can be used alone or in combination. For example, carbon black and silica can be used in combination.

Examples of silica include dry white carbon, wet white carbon, colloidal silica, precipitated silica, calcium silicate, aluminum silicate, and the like. Among these, preferred is wet white carbon containing hydrous silicic acid as the main component. A carbon-silica dual phase filler comprising carbon black and silica carried on the surface thereof may also be used. These silicas can be used alone or in combination. The nitrogen adsorption specific surface area (measured by the BET method according to ASTM D3037-81) of the silica to be used is preferably 20 to 400 m²/g, more preferably 50 to 220 m²/g, particularly preferably 80 to 170 m²/g. The silica preferably has a pH of 5 to 10.

As the silica, a variety of commercially available silicas can be used, for example. Examples thereof include "Hi-Si1210", "Hi-Sil233", and "Hi-Sil243LD" available from PPG Industries; "Zeosil 1115MP", "Zeosil 1165MP", and "Zeosil 165GR" available from Solvay S.A.; "ULTRASIL VN2", "ULTRASIL VN3", "ULTRASIL 7000GR", and "ULTRASIL 9100GR" available from EVONIK AG; "NIPSIL VN3", "NIPSIL AQ", and "NIPSIL ER", and "NIPSIL RS-150" available from TOSOH SILICA CORPORATION; and the like.

Examples of carbon blacks include furnace black, acetylene black, thermal black, channel black, and graphite. Examples of channel black include EPC, MPC, and CC. Examples of furnace carbon black include SAF, ISAF, HAF, MAF, FEF, SRF, GPF, APF, FF, CF, SCF, and ECF. Examples of thermal black include FT and MT. These carbon blacks can be used alone or in combination.

The amount of the filler to be compounded with the rubber composition according to the present invention is preferably 10 to 250 parts by weight, more preferably 15 to 150 parts by weight, still more preferably 20 to 130 parts by weight relative to 100 parts by weight of the polymer ingredients in the rubber composition.

To obtain a cross-linked rubber having further improved properties, the rubber composition according to the present invention may be further compounded with a silane coupling agent. The silane coupling agent is not particularly limited, and a variety of silane coupling agents can be used. In the present invention, sulfide-based, mercapto-based, protected mercapto-based (such as those having a carbonylthio group), thiocyanate-based, vinyl-based, amino-based, methacrylate-based, glycidoxy-based, nitro-based, epoxy-based, or chloro-based silane coupling agents can be suitably used. Specific examples of silane coupling agents include bis(3-(triethoxysilyl)propyl)disulfide, bis(3-(triethoxysilyl)propyl)trisulfide, bis(3-(triethoxysilyl)propyl)tetrasulfide, γ-mercaptopropyltriethoxysilane, 3-[ethoxybis(3,6,9,12,15-pentaoxaoctacosan-1-yloxy)silyl]-1-propanethiol, 3-octanoylthio-1-propyl-triethoxysilane, 3-trimethoxysilylpropyl-N,N-dimethylthiocarbamoyl tetrasulfide, γ-trimethoxysilylpropylbenzothiazyl tetrasulfide, 3-thiocyanatepropyltriethoxysilane, vinyltriethoxysilane, N-(β-aminoethyl)-γ-aminopropyltrimethoxysilane, 3-trimethoxysilylpropyl methacrylate monosulfide, γ-glycidoxypropyltriethoxysilane, 3-nitropropyltrimethoxysilane, β-(3,4-epoxycyclohexyl)ethyltrimethoxysilane, 3-chloropropyltrimethoxysilane, and the like. NXT-Z100, NXT-Z30, NXT-Z60, NXT-Z45, and NXT available from Momentive Performance Materials Inc., Si69, Si75, and VP Si363 available from Evonick Degussa AG, and the like can also be used. These silane coupling agents may be used alone or in combination. One or two or more of these may be preliminarily formed into an oligomer, and may be used in the oligomer form. The amount of the silane coupling agent to be compounded is preferably 0.1 to 30 parts by weight, more preferably 1 to 15 parts by weight relative to 100 parts by weight of the filler.

Furthermore, besides the ingredients described above, the rubber composition according to the present invention can be compounded with needed amounts of compounding agents such as an antioxidant, an activating agent, a process oil, a plasticizer, a lubricant, and a tackifier according to the normal method.

The rubber composition according to the present invention can be prepared by kneading the stabilized conjugated diene polymer according to the present invention, a filler, and other ingredients used as needed according to a conventional method. The kneading temperature is preferably 80 to 200°C, more preferably 120 to 180°C, and the kneading time is preferably 30 seconds to 30 minutes.

### <Cross-linkable rubber composition>

The cross-linkable rubber composition according to the present invention comprises the rubber composition according to the present invention described above and a cross-linking agent.

Examples of the cross-linking agent include sulfur, sulfur-containing compounds such as halogenated sulfur, organic peroxides, quinone dioximes, organic polyvalent amine compounds, alkyl phenol resins having a methylol group, and the like. Among these, sulfur is preferably used. The amount of the cross-linking agent to be compounded is preferably 0.1 to 15 parts by weight, more preferably 0.5 to 5 parts by weight, particularly preferably 1 to 4 parts by weight relative to 100 parts by weight of the polymer ingredients in the rubber composition.

Furthermore, besides the ingredients described above, the cross-linkable rubber composition according to the present invention can be compounded with needed amounts of compounding agents such as a cross-linking accelerator, a cross-linking activator, an antioxidant, an activating agent, a process oil, a plasticizer, a lubricant, and a tackifier according to the normal method.

If sulfur or a sulfur-containing compound is used as a cross-linking agent, use in combination with a cross-linking accelerator and a cross-linking activator is preferred. Examples of the cross-linking accelerator include sulfenamide-based cross-linking accelerators; guanidine-based cross-linking accelerators; thiourea-based cross-linking accelerators; thiazole-based cross-linking accelerators; thiuram-based cross-linking accelerators; dithiocarbamic acid-based cross-linking accelerators; xanthic acid-based cross-linking accelerators; and the like. Among these, preferred are those containing sulfenamide-based cross-linking accelerators. These cross-linking accelerators are used alone or in combination. The amount of the cross-linking accelerator to be compounded is preferably 0.1 to 15 parts by weight, more preferably 0.5 to 5 parts by weight, particularly preferably 1 to 4 parts by weight relative to 100 parts by weight of the polymer ingredients in the cross-linkable rubber composition.

Examples of the cross-linking activator include higher fatty acids such as stearic acid; zinc oxide; and the like. These cross-linking activators are used alone or in combination. The amount of the cross-linking activator to be compounded is preferably 0.05 to 20 parts by weight, particularly preferably 0.5 to 15 parts by weight relative to 100 parts by weight of the polymer ingredients in the cross-linkable rubber composition.

To obtain the cross-linkable rubber composition according to the present invention, the ingredients may be kneaded according to the normal method. For example, the target composition can be prepared by kneading ingredients excluding thermally unstable ingredients such as the cross-linking agent and the cross-linking accelerator, the stabilized conjugated diene polymer, and the filler, and then by mixing the thermally unstable ingredients such as the cross-linking agent and the cross-linking accelerator with the kneaded product. The kneading temperature during kneading of the ingredients excluding the thermally unstable ingredients, the stabilized conjugated diene polymer, and the filler is preferably 80 to 200°C, more preferably 120 to 180°C, and the kneading time is preferably 30 seconds to 30 minutes. The kneaded product is mixed with the thermally unstable ingredients after it is cooled to usually 100°C or less, preferably 80°C or less.

### <Cross-linked rubber>

The cross-linked rubber according to the present invention is prepared by cross-linking the cross-linkable rubber composition according to the present invention described above.

The cross-linked rubber according to the present invention can be produced using the cross-linkable rubber composition according to the present invention, for example, by shaping the rubber composition with a molding machine having a desired shape, such as an extruder, an injection molding machine, a press, or a roll, and performing a cross-linking reaction by heating to provide a cross-linked rubber having a fixed shape. In this case, the rubber composition may be preliminarily shaped and then cross-linked, and may be shaped and cross-linked at the same time. The shaping temperature is usually 10 to 200°C, preferably 25 to 120°C. The cross-linking temperature is usually 100 to 200°C, preferably 130 to 190°C, and the cross-linking time is usually 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked, even when the surface thereof is cross-linked. For this reason, the cross-linked rubber may be further heated for secondary cross-linking.

As a heating method, a common method used to cross-link rubber, such as press heating, steam heating, oven heating, or hot air heating, may be appropriately selected.

The cross-linked rubber according to the present invention thus prepared has excellently low heat buildup, high wet grip, and high operation stability. For this reason, owing its excellent properties, the cross-linked rubber according to the present invention can be used in a variety of applications to parts of tires such as cap treads, base treads, carcasses, sidewalls, and bead parts; materials for industrial products such as hoses, belts, mats, and antivibration rubbers; impact resistance improvers for resins; resin film cushioning materials; shoe soles; rubber shoes; golf balls; toys; and the like, for example. Especially, because of its excellently low heat buildup, high wet grip, and high operation stability, the cross-linked rubber according to the present invention is suitable for materials for tires.

### EXAMPLES

Hereinafter, the present invention will be described based on more detailed examples, but the present invention is not limited to these examples. Hereinafter, the term "parts" is based on weight unless otherwise specified weight. Tests and evaluations conformed to the followings.

### [Content of aromatic vinyl monomer unit in conjugated diene polymer, vinyl bond content]

The content of the aromatic vinyl monomer unit in a conjugated diene polymer and the vinyl bond content were determined by ¹H-NMR.

### [Mooney viscosity (ML1+4, 100°C) of stabilized conjugated diene polymer]

The Mooney viscosity (ML1+4) of a stabilized conjugated diene polymer was measured according to JIS K6300-1: 2013 under the following conditions:
· test temperature: 100°C or 125°C
· type of rotor: L type
· tester used: SHIMADZU Mooney Viscometer SMV-300J available from SHIMADZU CORPORATION

### [Mooney viscosity stability (1) of stabilized conjugated diene polymer]

In a Labo Plastomill with a volume of 60 cc, 100 parts by weight of a stabilized conjugated diene polymer was preheated at 150°C for 3 minutes, and then masticated at 100 rpm for 70 seconds. The masticated material was discharged from the Labo Plastomill, then stored at a temperature of 23°C and a humidity of 50% for 20 days, and the Mooney viscosity (ML1+4, 100°C) after storage was measured. Then, the amount of change in Mooney viscosity (ML1+4, 100°C) through storage was calculated by subtracting the Mooney viscosity (ML1+4, 100°C) after storage from the Mooney viscosity (ML1+4, 100°C) before storage. The amount of change thus calculated is shown as a test result of the Mooney viscosity stability (1) of the stabilized conjugated diene polymer in Table 1. Note that as the amount of change described above is closer to zero, the stabilized conjugated diene polymer can be determined to have superior Mooney viscosity stability during long-term storage.

### [Mooney viscosity stability (2) of stabilized conjugated diene polymer]

A stabilized conjugated diene polymer was stored in a thermostat bath at 50°C for 14 days, and the Mooney viscosity (ML1+4, 100°C) after storage was measured. Then, the amount of change in Mooney viscosity (ML1+4, 100°C) through storage was calculated by subtracting the Mooney viscosity (ML1+4, 100°C) after storage from the Mooney viscosity (ML1+4, 100°C) before storage. The amount of change thus calculated is shown as a test result of the Mooney viscosity stability (2) of the stabilized conjugated diene polymer in Table 1. Note that as the amount of change described above is closer to zero, the stabilized conjugated diene polymer can be determined to have superior Mooney viscosity stability during long-term storage.

### [Evaluation of thermal stability]

In a Labo Plastomill with a volume of 60 cc, 40 g of a stabilized conjugated diene polymer was preheated at 150°C for 3 minutes, and then masticated at 100 rpm. The amount of torque was monitored during the mastication. The thermal stability of the polymer was evaluated and denoted as follows: "B" denotes that a transient decrease in the amount of torque and then an increase in the amount of torque by at least two points were observed in 30 minutes from the beginning of the mastication, and "A" denotes that a transient decrease in the amount of torque and then an increase in the amount of torque by less than two points were observed in the 30 minutes. A stabilized conjugated diene polymer evaluated as "A" can be determined to have excellent thermal stability.

### (Polymerization Example 1 [polymerization solution a1 of conjugated diene polymer A1])

The atmosphere in a stainless steel polymerization reactor equipped with a stirrer with an inner volume of 20 L was replaced with dry nitrogen. Next, the polymerization reactor was charged with 10.2 kg of industrial hexane (trade name: Hexane (general product), available from Sumitomo Chemical Co., Ltd., density: 0.68 g/mL), 712 g of 1,3-butadiene, 388 g of styrene, 99 mmol of tetrahydrofuran, and 24.15 mmol of ethylene glycol diethyl ether. Next, a n-hexane solution containing a needed amount of n-butyllithium (n-BuLi)to neutralize impurities that are present in the system and inhibit polymerization was poured into the polymerization reactor, then a n-hexane solution containing 16.06 mmol of n-butyllithium (n-BuLi) was poured into the polymerization reactor, and the mixture was stirred at 160 rpm and an internal temperature of 31°C in the polymerization reactor. Immediately after the beginning of polymerization, 764 g of 1,3-butadiene and 168 g of styrene were continuously supplied to the mixture over 90 minutes, and 9.20 mmol of bis(diethylamino)methylvinylsilane was supplied to the mixture after 15 minutes from the beginning of polymerization, followed by stirring. After 90 minutes from the beginning of polymerization, 168 g of 1,3-butadiene was continuously added to the mixture over 20 minutes with stirring, and the mixture was further stirred for 10 minutes to give a polymerization solution. Next, 1.24 mmol of tin tetrachloride was added to the resulting polymerization solution, which was stirred for 15 minutes. Then, 11.1 mmol of N-(3-dimethylaminopropyl)acrylamide was added to the solution, and the resulting solution was allowed to react for 10 minutes. Thereafter, methanol was added as a polymerization terminator in an amount twice the amount (in mole) of n-butyllithium used to give a polymerization solution a1 containing a conjugated diene polymer A1.

An aliquot of 10 g of the resulting polymerization solution a1 was collected, and dried under reduced pressure at 55°C for 12 hours to give a conjugated diene polymer A1. The resulting conjugated diene polymer A1 was measured according to the methods described above. As a result, the styrene unit content was 25.9% by weight, and the vinyl bond content of the butadiene units was 59.2 mol%.

In Examples and Comparative Examples below, the following stabilizers B1, B2, and C1 were used.
stabilizer B1: 2,4-bis[(octylthio)methyl]-o-cresol
stabilizer B2: octyl-3,5-di-tert-butyl-4-hydroxy-hydrocinnamate
stabilizer C1: reaction product of N-phenylbenzeneamine and 2,4,4-trimethylpentene

### (Example 1 [stabilized conjugated diene polymer P1])

To the polymerization solution a1 containing 100 parts by weight of the conjugated diene polymer A1 obtained in Polymerization Example 1, 0.15 parts by weight of the stabilizer B1, 0.30 parts by weight of the stabilizer B2, and 0.15 parts by weight of the stabilizer C1 were added, and the solution was stirred. Then, a large proportion of the volatile components in the resulting polymerization solution were evaporated at ambient temperature for 24 hours, and the product was further dried under reduced pressure at 55°C for 12 hours to give a stabilized conjugated diene polymer P1. The resulting stabilized conjugated diene polymer P1 was measured for thermal stability, Mooney viscosity stability (1), and Mooney viscosity stability (2). The results are shown in Table 1.

Note that a cross-linked rubber was obtained using the resulting stabilized conjugated diene polymer P1 in the same manner as in Example 1 of WO 2019/073829 and evaluated in the same manner as in Example 1 of WO 2019/073829, and it was found that the resulting cross-linked rubber had low heat buildup, excellent wet grip properties, and excellent steering stability.

### (Comparative Example 1 [stabilized conjugated diene polymer P2])

A stabilized conjugated diene polymer P2 was obtained in the same manner as in Example 1 except that to the polymerization solution a1 containing 100 parts by weight of the conjugated diene polymer A1 obtained in Polymerization Example 1, 0.60 parts by weight of the stabilizer B1 was added, and the solution was stirred. The resulting stabilized conjugated diene polymer P2 was measured for thermal stability, Mooney viscosity stability (1), and Mooney viscosity stability (2). The results are shown in Table 1.

### (Comparative Example 2 [stabilized conjugated diene polymer P3])

A stabilized conjugated diene polymer P3 was obtained in the same manner as in Example 1 except that to the polymerization solution a1 containing 100 parts by weight of the conjugated diene polymer A1 obtained in Polymerization Example 1, 0.20 parts by weight of the stabilizer B1 and 0.40 parts by weight of the stabilizer B2 were added, and the solution was stirred. The resulting stabilized conjugated diene polymer P3 was measured for thermal stability, Mooney viscosity stability (1), and Mooney viscosity stability (2). The results are shown in Table 1.

### (Comparative Example 3 [stabilized conjugated diene polymer P4])

A stabilized conjugated diene polymer P4 was obtained in the same manner as in Example 1 except that to the polymerization solution a1 containing 100 parts by weight of the conjugated diene polymer A1 obtained in Polymerization Example 1, 0.30 parts by weight of the stabilizer B1 and 0.30 parts by weight of the stabilizer C1 were added, and the solution was stirred. The resulting stabilized conjugated diene polymer P4 was measured for thermal stability, Mooney viscosity stability (1), and Mooney viscosity stability (2). The results are shown in Table 1.

### [Table 1]

**Table 1**

| | Example 1 | Comp. Ex. 1 | Comp. Ex. 2 | Comp. Ex. 3 |
|---|---|---|---|---|
| Conjugated diene polymer A1 (parts by weight) | 100 | 100 | 100 | 100 |
| Stabilizer B1 (parts by weight) | 0.15 | 0.60 | 0.20 | 0.30 |
| Stabilizer B2 (parts by weight) | 0.30 | | 0.40 | |
| Stabilizer C1 (parts by weight) | 0.15 | | | 0.30 |
| Mooney viscosity stability (1) | 1.3 | -4.7 | 1.1 | -3.1 |
| Mooney viscosity stability (2) | 2.5 | 5.6 | 5.3 | 2.5 |
| Thermal stability | A | A | A | A |

As shown in Table 1, the stabilized conjugated diene polymers prepared by adding two or more hindered phenol-based stabilizers (B) and an aromatic amine-based stabilizer (C) to the conjugated diene polymer (A) containing a tin atom and/or a silicon atom had excellent Mooney viscosity stability during storage (Example 1).

## Claims

1. A stabilized conjugated diene polymer comprising a conjugated diene polymer containing at least one of a tin atom and a silicon atom, two or more hindered phenol-based stabilizers, and an aromatic amine-based stabilizer.

2. The stabilized conjugated diene polymer according to claim 1, wherein the conjugated diene polymer contains a tin atom.

3. The stabilized conjugated diene polymer according to claim 1 or 2, wherein the conjugated diene polymer contains a functional group interactive with silica.

4. The stabilized conjugated diene polymer according to any one of claims 1 to 3, wherein the conjugated diene polymer contains a unit of a vinyl compound containing a functional group interactive with silica.

5. The stabilized conjugated diene polymer according to claim 4, wherein the unit of a vinyl compound containing a functional group interactive with silica is a unit represented by General Formula (3) below: 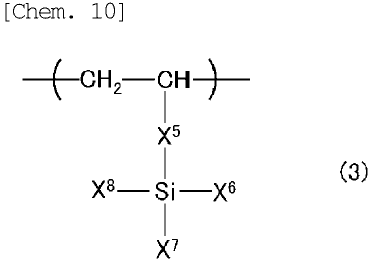 where in General Formula (3) above, X⁵ is a chemical single bond or a hydrocarbylene group, and X⁶, X⁷, and X⁸ are each independently a hydroxyl group, a substituted amino group, a hydrocarbyloxy group, or an optionally substituted hydrocarbyl group.

6. The stabilized conjugated diene polymer according to any one of claims 1 to 5, wherein the total content of the hindered phenol-based stabilizers is 0.01 to 2.00 parts by weight relative to 100 parts by weight of the conjugated diene polymer.

7. The stabilized conjugated diene polymer according to any one of claims 1 to 6, wherein the content of the aromatic amine-based stabilizer is 0.01 to 2.00 parts by weight relative to 100 parts by weight of the conjugated diene polymer.

8. The stabilized conjugated diene polymer according to any one of claims 1 to 7, comprising a hindered phenol-based stabilizer containing a sulfur atom and a hindered phenol-based stabilizer containing no sulfur atom as the hindered phenol-based stabilizers (B).

9. The stabilized conjugated diene polymer according to any one of claims 1 to 8, comprising a semi-hindered phenol-based stabilizer and a double-hindered phenol-based stabilizer as the hindered phenol-based stabilizers (B).

10. The stabilized conjugated diene polymer according to any one of claims 1 to 9, wherein the ratio of the content of the hindered phenol-based stabilizers (B) to the content of the aromatic amine-based stabilizer (C) is 10:1 to 0.1:1 as a weight ratio represented by "hindered phenol-based stabilizer (B) :aromatic amine-based stabilizer (C) ".

11. A rubber composition comprising the stabilized conjugated diene polymer according to any one of claims 1 to 10 and a filler.

12. A cross-linkable rubber composition comprising the rubber composition according to claim 11 and a cross-linking agent.

13. A cross-linked rubber prepared by cross-linking the cross-linkable rubber composition according to claim 12.

14. A tire comprising the cross-linked rubber according to claim 13.
